# EUROPEAN PATENT APPLICATION

(11) **EP 1 398 204 A1**
(43) Date of publication of application: **17.03.2004**
(21) Application number: 03020416.8
(22) Date of filing: 10.09.2003
(51) Int. Cl.: B60K 37/00, B60Q 3/04, G02F 1/1347, G02B 27/22, H04N 13/00

(54) **Composite display device and a method for driving the same**

(30) Priority: 11.09.2002 JP 2002265465; 11.09.2002 JP 2002265764; 19.11.2002 JP 2002335454; 20.11.2002 JP 2002336534; 31.01.2003 JP 2003025153
(71) Applicant: Optrex Corporation, Tokyo 116-0014 (JP)
(72) Inventor: Ozeki, Masao, Asahi Glass Co, Ltd, Yokohama-shi Kanagawa (JP); Niiyama, Satoshi, Asahi Glass Co, Ltd, Yokohama-shi Kanagawa (JP); Kawaguchi, Kazuyoshi, Optrex Corp., Tokyo (JP); Suzuki, Toshihiko, Asahi Glass Co, Ltd, Yokohama-shi Kanagawa (JP); Isshiki, Masanobu, Asahi Glass Co, Ltd, Yokohama-shi Kanagawa (JP)
(74) Representative: Müller-Boré & Partner Patentanwälte

(57) **Abstract**

A composite display device comprising a first display member 1 and a second display member disposed between the first display member 1 and an observer 14 wherein the second display member is an electro-optical element 2 which transmits light under application of no voltage and scatters light under application of a voltage, and the composite display device is clear and provides a feeling of open air in an unused state: allows an observer to see simultaneously a background scenery and a display effected by the electro-optical element in a used state, and provides to an observer an impression that a picture image is suspended in space.

## Description

The present invention relates to a composite display device using an electro-optical element comprising a transparent substrate such as glass to effect a display by utilizing scattering of light.

For a display device such as CRT, PDP, a liquid crystal display device, an LED display device or the like, an attempt to make the display portion thin or flat has been accelerated. In a display device usable in, for example, an automobile, it is desirable that the display device is transparent'so that an observer can see the background of the display portion because he can obtain information even on a snow road or under midsummer sunshine, and a forward sight of the driver is not disturbed.

Further, as the display device for an automobile, there has been known to use a liquid crystal display for an instrument panel and to use a headup display (hereinbelow, referred to as HUD) for projecting information in a driver's forward sight. These display devices are used in order to notify an alarm to the driver when various abnormal states arise.

Recently, a navigation system using a position measuring system such as GPS (global positioning system), a self-diagnosis device for checking an abnormal condition of a system for controlling the engine or computer, or the like is installed in an automobile so that various kinds of information can be notified to the driver in order to assure stable and comfortable cruising.

HUD is to display an image formed by projecting light from a display unit on a translucent reflective plane such as a half mirror or a hologram at a windshield glass so that an observer can see the display.

Use of the half mirror or the hologram, however, has such drawbacks that the viewing angle is narrow, the background scenery is colored and the transparency is damaged and that the quantity of information to be displayed is small although there is a merit that the driver can observe it without moving his eyeshot from the forward direction.

Further, in the above-mentioned display devices, when direct sunlight in daytime enters into the windshield glass, the contrast decreases. In such condition, if an abnormal state occurs, the display is effected simultaneously in HUD and the liquid crystal display in the instrument panel. Accordingly, there is a possibility that the driver's attention to a forward direction is insufficient because he has to pay attention to both displays and the driver's eyes deviate from the forward direction.

As a conventional technique of a new display device formed by stacking display members, there is such one that a first liquid crystal panel is disposed in front of a dial plate for meters, and a second liquid crystal panel of light scattering type is disposed between the dial plate and the first liquid crystal display panel. The second liquid crystal panel comprises PDLC (polymer dispersed liquid crystal) capable of changing a light scattering state to a light transmitting state and vice versa (see, for instance, a patent document 1: JP-A-7-271310 (pages 2 to 4, Figs. 1 and 2)).

As a technique analogous to the above-mentioned PDLC for meters, there is known a light-controlling glass which provides a light transmitting state by applying a voltage and a light scattering state under no-application of voltage.

In the first conventional technique, when the PDLC is rendered to be a light transmitting state, an observer can observe the content of display of the dial plate in addition to the content of display of the first liquid crystal panel, and when PDLC is rendered to be a light scattering state, information of the dial plate is not provided and the observer can observe only the content of display of the first liquid crystal panel. Namely, PDLC serves as a shielding plate to the dial plate.

Further, PDLC becomes a light transmitting state by applying a voltage and a light scattering state when no voltage is applied. Namely, a light scattering member is provided when no voltage is applied, e.g., when a power source is turned off.

With respect to driving the electro-optical element, there has been known to use a display device to display a color display by combining a monochrome liquid crystal panel and a light source capable of switching luminescent colors among red, blue and green (see, for instance, a patent document 2: JP-A-56-27198 (Figs. 3 and 4)). This system is called a field sequential color system. In the field sequential color system, an image in response to each luminescent color is displayed sequentially in the liquid crystal panel. Accordingly, it is necessary for the liquid crystal panel to have a substantially high response speed.

Since it is necessary to display one color in a time of 1/3 of one field in the field sequential color system. Accordingly, when a display of 60 field/sec is to be effected for example, a time usable for display is about 5 ms. Accordingly, a response time shorter than 5 ms is required for liquid crystal itself. As liquid crystal capable of realizing high speed response, there have been known a ferroelectric liquid crystal, an antiferroelectric liquid crystal, a nematic liquid crystal in a small gap, liquid crystal of OCB mode or the like.

It is an object of the present invention to provide a composite display device which provides a display in a background scenery in an "ON-period" and minimizes the presence of it in an "OFF-period".

In accordance with the first aspect of the present invention, there is provided a composite display device comprising a first display member and a second display member disposed between the first display member and an observation point wherein the second display member comprises an electro-optical element which transmits light under application of no voltage and scatters light under application of a voltage, and the light transmittance under application of no voltage is at least 80%.

According to the second aspect, there is provided the composite display device according to aspect 1, wherein the haze value in a light scattering state is at least 80%.

According to the third aspect, there is provided the composite display device according to the first aspect or the second aspect, wherein the first display member is a mirror or a gauge.

According to the fourth aspect, there is provided the composite display device according to the first aspect or the second aspect, wherein the first display member is a person or a physical body. The physical body is an object to be observed by an observer. A scenery in an eyesight direction is included.

According to the fifth aspect, there is provided the composite display device according to the first, second, third or fourth aspect, wherein a plurality of second display members are arranged.

According to the sixth aspect, there is provided the composite display device according to the fifth aspect, wherein the plurality of second display members display the same display pattern, and when a second display member is in a display state, another second display member is in a non-display state.

According to the seventh aspect, there is provided the composite display device according to anyone of the first to sixth aspects, wherein the electro-optical element comprises a pair of substrates with transparent electrodes and a composite layer interposed therebetween, and the composite layer comprises a liquid crystal/cured resin composite containing liquid crystal and a cured product of a curable compound soluble to the liquid crystal.

According to the eighth aspect, there is provided the composite display device according to anyone of the first to seventh aspects, wherein the portion excluding a connecting portion to an external circuit formed in a peripheral portion of the electro-optical element, is transparent.

According to the ninth aspect, there is provided the composite display device according to anyone of the first to eighth aspects, wherein there are provided an illumination means and a battery for applying a driving voltage to the electro-optical element.

According to the tenth aspect, there is provided the composite display device according to anyone of the first to ninth aspects, wherein an antireflection film or an ultraviolet ray shielding film is disposed on the surface of the electro-optical element.

According to the eleventh aspect, there is provided the composite display device according to anyone of the first to tenth aspects, wherein the electro-optical element comprises a pair of substrates with transparent electrodes and a composite layer comprising liquid crystal and a cured product of a curable compound soluble to the liquid crystal, the composite layer being interposed between said pair of substrates, and adhesive spacers arranged in the composite layer.

According to the twelfth aspect, there is provided the composite display device according to anyone of the first to eleventh aspects, wherein light sources are provided to illuminate the electro-optical element, and the light sources emit at least two light source colors, wherein the light sources emit the light source colors sequentially, the frequency of each colored light from the light sources is at least 40Hz, and at least a portion of the display region of the electro-optical element is rendered to be a light scattering state in association with illumination by one or a plurality of light source colors to the electro-optical element to thereby provide a display color comprising one or plurality of light source colors.

According to the thirteenth aspect, there is provided the composite display device according to the twelfth aspect, wherein the light sources are able to emit a color of red, blue or green independently.

According to the fourteenth aspect, there is provided the composite display device according to the twelfth aspect or the thirteenth aspect, wherein the display color comprises at least 8 colors.

According to the fifteenth aspect, there is provided a method for driving the composite display device described in any one of the first to fourteenth aspects, characterized in that a field sequential driving method wherein a change of light source colors of the light sources is associated with a display state of the electro-optical element, is used.

According to the sixteenth aspect, there is provided the method according to the fifteenth aspect, wherein the composite display device is used for at least displaying a speed of an automobile.

In the accompanying drawings:
Fig. 1 is a diagrammatical perspective view showing a composite display device according to the present invention;
Fig. 2 is a diagrammatical cross-sectional view showing an embodiment of the composite display device of the present invention;
Fig. 3 shows chemical formulas of curable compound usable for the electro-optical element;
Fig. 4 is a diagrammatical cross-sectional view of another embodiment of the display device of the present invention;
Fig. 5 is a diagram showing an example of arrangement of the composite display device of the present invention;
Fig. 6 is a diagram showing another example of arrangement of the composite display device of the present invention;
Fig. 7 is a diagram showing another example of arrangement of the composite display device of the present invention;
Fig. 8 is a diagram showing another embodiment of an illumination means of the composite display device of the present invention;
Fig. 9 is a diagram showing another embodiment of the illumination means of the composite display device of the present invention;
Fig. 10 is a diagram showing another embodiment of the illumination means of the composite display device of the present invention;
Fig. 11 is a diagram showing another example of arrangement of the composite display device of the present invention;
Fig. 12 is a diagram showing another example of arrangement of the composite display device of the present invention;
Fig. 13 is a diagram showing another example of a display method on the composite display device of the present invention;
Fig.14 is a diagrammatical cross-sectional view showing another embodiment of the present invention;
Fig. 15 is a graph showing voltage-transmittance characteristics of the electro-optical element used in the present invention;
Fig. 16 is a diagram showing an example of using the composite display device of the present invention;
Fig. 17 is a diagram showing an example of arrangement of a light source used in the present invention;
Fig. 18 is a diagram showing an embodiment of the composite display device of the present invention;
Fig. 19 is a diagram showing a state of display by the composite display device of the present invention;
Fig. 20 is a diagram showing a state of display by the composite display device of the present invention, which is different from that of Fig. 19;
Fig. 21 is a diagram showing a state of display by the composite display device of the present invention, which is different from those of Figs. 19 and 20;
Fig. 22 is a diagram showing an example of operations (a sequence of operations) of the electro-optical element of the present invention;
Fig. 23 is a diagram showing another example of operations (a sequence of operations) of the electro-optical element of the present invention;
Fig. 24 is a diagram showing a state of display by the composite display device of the present invention, which is different from those of Figs. 21, 22 and 23;
Fig. 25 is a diagram showing another example of display in the present invention;
Fig. 26 is a diagram showing another example of display in the present invention;
Fig. 27 is a diagram showing another embodiment of the present invention;
Fig. 28 is a diagram in slant views showing states of display by the electro-optical element shown in Fig. 27;
Fig. 29 is a diagram in slant views showing other states of display by the electro-optical element shown in Fig. 27;
Fig. 30 is a diagrammatical perspective view showing another embodiment of the present invention;
Fig. 31 is a diagrammatical cross-sectional view showing another embodiment of the electro-optical element of the present invention;
Fig. 32 is a diagrammatical cross-sectional view showing an example in which the composite display device of the present invention is applied;
Fig. 33 is a diagram showing an example of display by the composite display device of the present invention;
Fig. 34 is a diagram showing a relation between driving signals of the electro-optical element of the composite display device of the present invention and illumination;
Fig. 35 is a diagram showing a relation between driving signals of the electro-optical element of the composite display device of the present invention and illumination;
Fig. 36 is a diagram showing a relation between driving signals of the electro-optical element of the composite display device of the present invention and illumination;
Fig. 37 is a diagram showing a relation between driving signals of the electro-optical element of the composite display device of the present invention and illumination; and
Fig. 38 is a block diagram showing an embodiment of the structure of a driving circuit for driving the electro-optical element.

In the following, preferred embodiments of the present invention will be described with reference to the drawing.

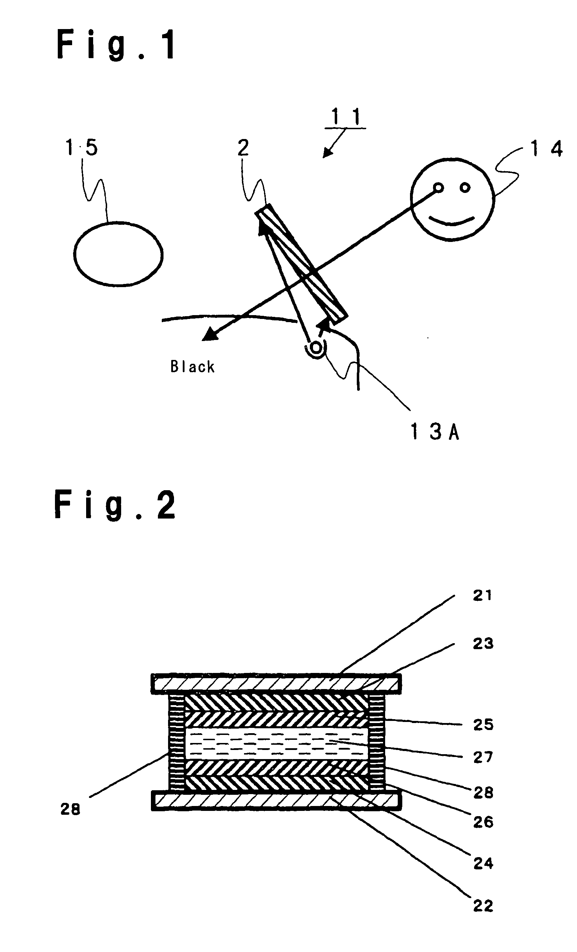

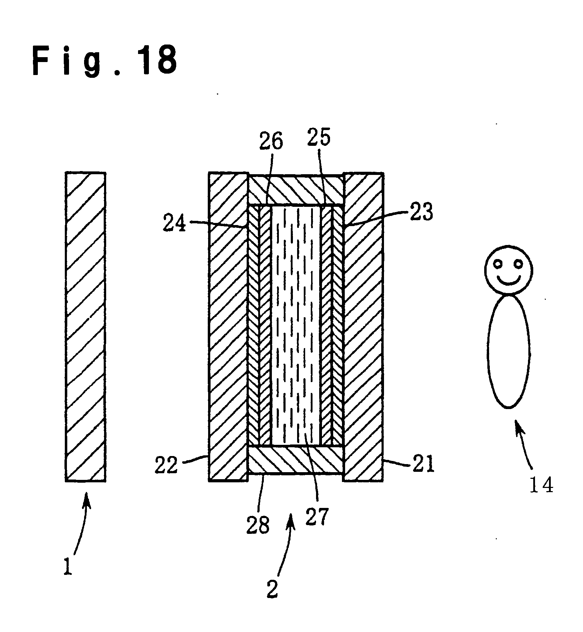

Figs. 1 and 18 are diagrammatically perspective views showing preferred embodiments of the composite display device of the present invention. The composite display device 11 shown in Fig. 1 is provided with an illuminator 13A. A driving voltage is applied to an electro-optical element 2 and a lightening voltage is applied to the illuminator 13A by a power source or driving circuits (not shown).

In the composite display device 11 of the present invention, the electro-optical element 2 is transparent in ordinary circumstances and it serves as ordinary glass. However, when an external signal is supplied to the composite display device, the electro-optical element 2 can display whitened characters and figures in an embossed state. Further, by whitening the characters and figures, a stimulation value of color is reduced so that a soft display is provided to an observer 14. Accordingly, the observer 14 feels comfortableness and luxuriousness to the display whereby the quality of display is increased. Further, a bright display can be presented since light entering into the display device from a side of the observer and an opposite side of the observer is scattered.

In the present invention, "transparent" means that the light transmittance is at least 50%. The light transmittance of the electro-optical element under application of no voltage is at least 80%. A light scattering state means a state that the haze value is at least 80%.

The illuminator 13A may use a colored illumination light. In this case, whitened characters or figures displayed by the electro-optical element 2 can have a color. Further, when a dichroic dye is contained in the electro-optical element, a white color in scattering state may be colored.

Next, description will be made with reference to Fig. 18. As shown in Fig. 18, an electro-optical element 2 as the second display member is disposed between a first display member 1 and an observation point of an observer 14.

The electro-optical element 2 used in the present invention comprises transparent substrates 21, 22 and a composite layer interposed between the substrates so that a light transmitting state and a light scattering state can be provided repeatedly. Visible light is used to effect the light transmitting state and the light scattering state. The light transmitting state can be provided when the electro-optical element 2 does not display, e.g., when the power source is in an OFF state. Then, an observer can see a background side of the electro-optical element 2. Although the light transmittance should be higher so as to give to the observer a feeling of open air. Basically, the light transmittance is determined to be at least 80%, particularly, at least 85%. However, it can be selected appropriately depending on degrees of requirement of the feeling of open air and clearness.

Although it is, in particular, no limitation to the light scattering state, scattering properties should be higher in order to shield the display of the first display member 1. It is preferable that the haze value is at least 80%. The haze value was measured with HGM-3DP manufactured by Suga Test Instruments Co., Ltd. The haze value is ruled in JIS R3212 and 7105, and is obtained by haze = (diffuse transmittance/total light transmittance) × 100 (%).

In the present invention, the first display member may display scenery in an eyesight direction that can be seen through the electro-optical element 2 disposed near the driver's seat in a train, automobile, aircraft or the like. For instance, when the composite display device of the present invention is disposed on the dashboard of an automobile, an observer can see a display of the electro-optical element in his eyesight in the same line of sight.

Further, a person at a counter side or an article, in a case that a necessary information is interchanged in a face-to-face relation or an article is transferred, is also included as the first display member. A service provider at a cash register, a counter or a reception desk in a bank, station, supermarket, department store, convenience store and so on can be the first display member.

Further, the first display member 1 may be an object to attract observer's attention, displayed commodities, a person to provide services or a ticket selling machine. The composite display device of the present invention is so constructed that an observer can observe the first display member any time and the second display member can display a specified information.

Further, in a case that the electro-optical element 2 is disposed in front of a speed meter etc. of an automobile, it is preferable that the degree of forward scattered radiation is higher because light emitted from the speed meter etc. can be utilized at night, although it depends on the direction of entering of light to the electro-optical element 2.

Switching between the light transmitting state and the light scattering state can be effected by constructing the electro-optical element 2 so that it comprises a pair of substrates 21, 22 with transparent electrodes 23, 24 and a composite layer 27 interposed between the substrates, wherein when a voltage is applied across the transparent electrodes 23, 24, the composite layer 27 provides the light scattering state, and when the application of the voltage is stopped, the composite layer 27 provides the light scattering state. Reference numerals 25, 26 designate aligning films.

In the present invention, it is important that an electro-optical element portion excluding a connecting portion to an external circuit formed in a peripheral portion of the electro-optical element is transparent. As a sealing material for sealing the peripheral portion of the electro-optical material, a transparent material is used. When a frame member is used, a transparent frame member is used. By such arrangement, a display appearing as if a character or a figure is suspended in space in a background scenery, can be emphasized.

Fig. 2 is a diagrammatical cross-sectional view showing an embodiment of the electro-optical element of the display device of the present invention. In Fig. 2, transparent electrodes 23, 24 are provided on opposed planes of a pair of substrates 21, 22. On respective inner sides of transparent electrodes, aligning films 25, 26 are formed. Between the aligning films 25, 26, a composite layer 27 is sandwiched by interposing spacers (not shown) for controlling the distance. Reference numeral 28 designates a sealing layer.

Material for the substrates 21, 22, is not in particular limited as far as transparency can be assured, e.g., a glass substrate or a plastic substrate can be used. Further, the shape of the electro-optical element is not always necessary to be flat but it may be curved.

For the transparent electrodes 23, 24 formed on the substrates 21, 22, a transparent electrode material composed of a metal oxide such as ITO (indium oxide-tin oxide) can be used.

In the composite display device having the structure as shown in Fig. 1, illumination light from the illuminator 13A may be changed to an optional color so that a character or a figure can have an optional color. It is preferable that the illuminator 13A is disposed at an inclination angle of 45-60° with respect to the normal line extending from the center of the electro-optical element 2. By disporting the illuminator 13A in such angular relation, an observer 14 can observe simultaneously background 15 and the electro-optical element 2 without recognition of the illuminator 13A.

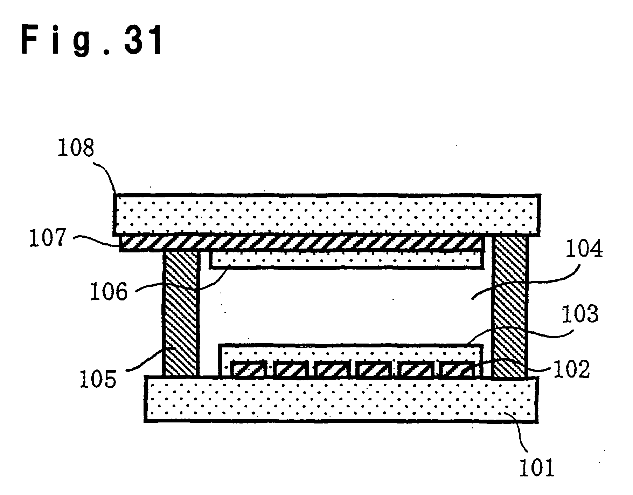

Fig. 31 is a diagrammatical cross-sectional view of another embodiment of the electro-optical element used in the present invention. The electro-optical element is provided with dot-matrix type electrodes. In Fig. 31, transparent electrodes 102, 107 are provided on opposing planes of a pair of substrates 101, 108. On respective inner sides of the transparent electrodes, aligning films 103, 106 are formed. A composite layer 104 is sandwiched between the aligning films 103, 106 by interposing spacers (not shown) for controlling the distance. The circumferential portion of the composite layer 104 is sealed by a sealing layer 105.

Material for the substrates 101, 108 is not in particular limited as far as transparency can be assured. A glass substrate or a plastic substrate may be used for the substrates 101, 108. Further, the shape of the electro-optical element 2 is not always necessary to be flat but it may be curved.

In the following, the structure of the electro-optical element will be described with reference to Fig. 2. In the combination of aligning directions of the paired substrates, the aligning directions are preferably in parallel. After providing the aligning films 25, 26 made of a thin resin film on opposed surfaces of the electrodes on the substrates, the aligning films are subjected to a rubbing treatment so as to give to the aligning films function to align liquid crystal on or above the surfaces of the electrodes. When liquid crystal having a positive dielectric anisotropy is used as liquid crystal, a rubbing treatment is preferably conducted to the thin resin films on the surfaces of electrodes from the viewpoint of transparency.

When liquid crystal having a negative dielectric anisotropy is used as liquid crystal, the treatment should be conducted so that the pretilt angle of liquid crystal molecules at the side where the substrates 21, 22 are in contact with the composite layer is 60° or more with respect to substrate surfaces, whereby a defective alignment can be lessened and transparency can be improved. In this case, the rubbing treatment is unnecessary. The pretilt angle is more preferably 70° or more. The reference direction of the pretilt angle is 90° in the direction perpendicular to a substrate surface.

The above-mentioned composite layer is formed by sandwiching a composition comprising liquid crystal and a curable compound soluble to the liquid crystal between a pair of substrates with transparent electrodes and by curing the curable compound by heat, ultraviolet rays or electron beams.

The liquid crystal in the composite layer can be selected appropriately from known liquid crystal. Liquid crystal of either a positive type or a negative type can be used if an appropriate aligning film or element structure is selected. However, a negative type liquid crystal is preferred from viewpoints of its having high transparency and high response speed. Further, the absolute value of dielectric anisotropy is preferably large in order to reduce the driving voltage.

In order to form the cured product, it is preferable that the liquid crystal and the curable compound are separated from each other so that the cured product has good transparency and only the liquid crystal can respond to the application of a voltage. Further, it can reduce the driving voltage.

As the curable compound to produce a cured product having such structure, a curable compound soluble to liquid crystal should be selected. Then, it is possible to control the aligning of an uncured mixture, and a high transparency is obtainable in curing of the cured product.

As a curable compound, a compound represented by Formula (1) or a compound represented by Formula (2) can be exemplified.

A¹-O- (R¹)ₘ-O-Z-O- (R²)ₙO-A² Formula (1)

A³-(OR³)ₒ-O-Z'-O-(R⁴O)ₚ-A⁴ Formula (2)

Where each of A¹, A², A³ and A⁴ which are independent of one another, is an acryloyl group, a methacryloyl group, a glycidyl group or an allyl group; each of R¹, R², R³ and R⁴ which are independent of one another, is an alkylene group having a carbon number of from 2 to 6; each of Z and Z' which are independent of each other, is a bivalent mesogen structural portion, and each of m, n, o and p which are independent of one another, is an integer of from 1 to 10.

By introducing an oxyalkylene structure having a high molecular motility including R¹, R², R³ or R⁴ between the mesogen structural portion of Z or Z' and the curable portion of A¹, A², A³ or A⁴ of Formula (1) or (2), the molecular motility in the curable portions during curing process can be improved, whereby it is possible to harden sufficiently in a short time.

The curable portion A¹, A², A³ or A⁴ of Formulas (1) and (2) may be anyone of the above-mentioned functional groups capable of being cured by light or heat. Among these, an acryloyl group or a methacryloyl group which is suitable for photo-curing is preferably used because temperature for curing can be controlled.

The carbon number of R¹, R², R³ or R⁴ in Formulas (1) and (2) is preferably from 1 to 6 from the viewpoint of the molecular motility. An ethylene group having a carbon number of 2 and a propylene group having a carbon number of 3 are more preferable.

As the mesogen structural portion Z or Z' in Formulas (1) and (2), a polyphenylene group formed by connection of 1, 4-phenylene groups can be exemplified. It may be one having a part or all of the 1, 4-phenylene groups replaced by a 1, 4-cyclohexylene group. Further, A part or all of hydrogen atoms in the 1, 4-phenylene group and the 1, 4-cyclohexylene group may be replaced by substituents such as a C₁₋₂alkyl group, a halogen atom, a carboxyl group or an alkoxycarbonyl group.

As the preferred mesogen structural portion Z or Z', a biphenylene group having two 1, 4-phenylene groups connected (hereinbelow, referred to as 4, 4-bephenylene group which is a biphenylene group having two 1, 4-phenylene groups connected), a terphenylene group having three 1, 4-phenylene groups connected, and one of which one to four hydrogen atoms in these groups are substituted with a C₁₋₂alkyl group, a fluorine atom, a chlorine atom or a carboxyl group, may be mentioned. The most preferable one is a 4, 4-bephenylene group having no substituent. The bonding of 1, 4-phenylene groups or 1, 4-cyclohexylene groups with one to another may be all a single bond or any one of bonds described below.

**―CH**_{**2**}**―CH**_{**2**}**―** **―C≡C―**

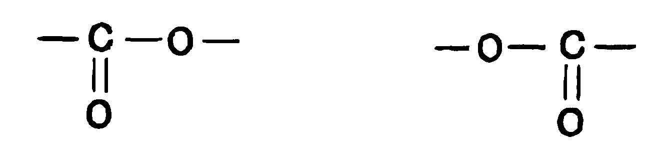

The integer of each of m, n, o and p which are independent of one another, in Formulas (1) and (2) is preferably from 1 to 10, more preferably, from 1 to 4. If the number of these is too large, compatibility with liquid crystal would decrease and there results reduction in the transparency of an electro-optical element after curing.

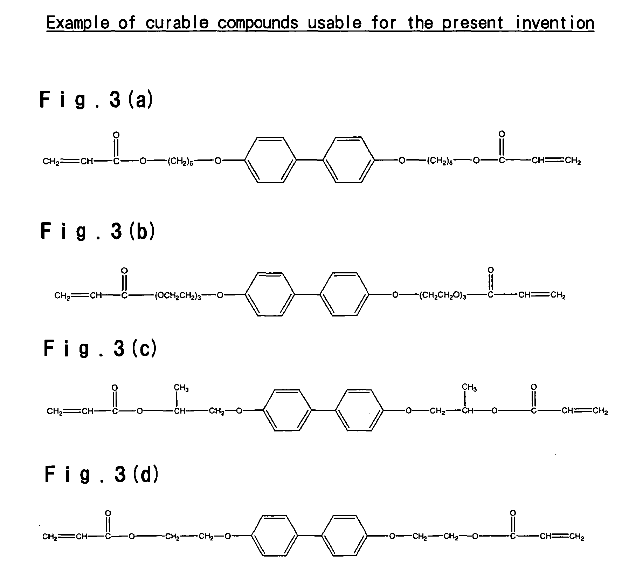

Fig. 3 shows some examples of the curable compound usable for the present invention. The composition containing liquid crystal and a curable compound may contain a plurality of curable compounds including curable compounds expressed by the above-mentioned Formulas (1) and (2). For example, when a plurality of curable compounds shown by Formulas (1) and (2) wherein m, n, o and p are different, are incorporated in the composition, it may improve compatibility to the liquid crystal.

The composition comprising liquid crystal and a curable compound may contain a curing catalyst. When photocuring is adopted, a photopolymerization initiator used generally for a photocurable resin such as a benzoin ether type, an acetophenone type or a phosphine oxide type can be used. When heat-curing is adopted, a curing catalyst of, e.g., a peroxide type, a thiol type, an amine type or an acid anhydride type can be used depending on type of the curable site, and a curing assistant such as an amine can be used if necessary.

The content of the curing catalyst is preferably at most 20 wt% based on the curable compound contained. In a case where a cured resin after curing is required to have a high molecular weight or a high specific resistance, the content is more preferably in a range of from 1 to 10 wt%.

As the method for aligning liquid crystal molecules so that the pretilt angle is 60° or more with respect to the substrate surface, there is a method using a vertically aligning agent. In using the vertically aligning agent, there are, for example, a method using a surfactant, a method for treating the substrate surface by a silane coupling agent containing an alkyl group or a fluoroalkyl group or a method using a commercially available vertically aligning agent such as SE1211 manufactured by Nissan Chemical Industries, Ltd., JALS-682-R3 manufactured by JSR Corporation, and so on. In order to form such a state that liquid crystal molecules are inclined in an arbitrary direction from a vertically aligning state, any known method may be used. The above-mentioned vertically aligning agents may be rubbed. Further, slits may be formed in an electrode or triangular poles may be disposed on an electrode so that a voltage can be applied obliquely to the substrate.

The thickness of the composite layer between two substrates can be determined by spacers or the like. The distance is preferably 1 to 50 µm, more preferably 3 to 30 µm. If the thickness of the composite layer is too small, the contrast ratio decreases. When it is too large, the driving voltage tends to increase.

Material for the sealing layer 28 may be any known one as far as a resin having high transparency is used. By using the resin having high transparency, the electro-optical element of the composite display device provides excellent transparency over the entire surface, and a display is emphasized as if a character or a figure is suspended in space. For example, when glass is used for the substrates, and an epoxy resin or an acrylic resin having a refractive index close to the refractive index of glass is used, a state that a transparent glass is suspended in space can be realized.

In the thus prepared composite display device, the response speed of display pixels between a transmitting state and a scattering state can be very fast as 3 ms or less. Further, viewing angle dependence is good and a very excellent transmitting state can be obtained even in view from an oblique direction, in comparison with scattering/transmitting modes by the conventional liquid crystal. For example, when a composite comprising liquid crystal and a curable compound having a composition described before is used, it is possible to eliminate substantially haze even when the composite display device is observed from a direction inclining 40° from the vertical direction.

The size of the composite display device may be any including a length of diagonal line of from about 10 cm to about 3 m.

The illumination means may be a metal halide lamp, an LED light source or the like. In order to effect a color display, a field sequential color system may be used. In this case, LED capable of high-speed switching is preferably used for the light source.

An anti-reflective film or a ultraviolet ray shielding film is preferably disposed on front and rear surfaces of the electro-optical element. When an AR coat (anti-reflective coat) comprising a multi-dielectric layer of SiO₂, TiO₂ and so on is applied to the front and rear surfaces of the electro-optical element, the reflection of outside light on a substrate surface can be reduced and the contrast can further be increased.

Further, when an active element having high aperture ratio (three-terminal element such as TFT or two-terminal element such as TFD) is used as a driving element of the electro-optical element for the composite display device and a static driving is used, a dot-matrix display of high response speed is possible.

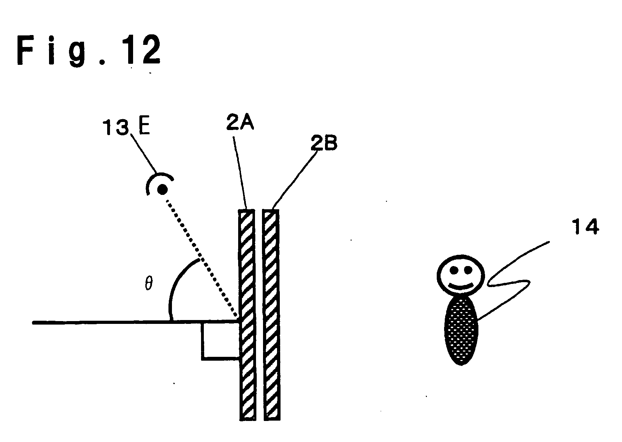

The composite display device of the present invention may be constituted by a plurality of electro-optical elements 2. Fig. 12 shows a case of using a plurality of elements, namely, two electro-optical elements 2A and 2B each capable of effecting the same display are used. For example, when an electro-optical element 2A is controlled to display a message or the like, the other electro-optical element 2B is controlled not to display. At the next moment, there is no display in the electro-optical element 2A and the electro-optical element 2B is effected to show the same display as that the electro-optical element 2A displayed. By repeating these displays in a certain time, a display can be moved in space. In order to attract attention to an observer 14, a method of turning-on and off a display has conventionally been used. According to the above-mentioned method, however, there is a large effect to attract attention to the observer because a display can be moved in space.

Further, an illuminator 13E may be provided to make the electro-optical element attractive. In particular, the illuminator 13E is preferably disposed at an inclination angle of from 45° to 60° with respect to the line perpendicular to the plane of the electro-optical element 2A as shown in Fig. 12. By disposing the illuminator 13E in such angular relation, an observer can observe simultaneously background and the electro-optical elements 2A, 2B.

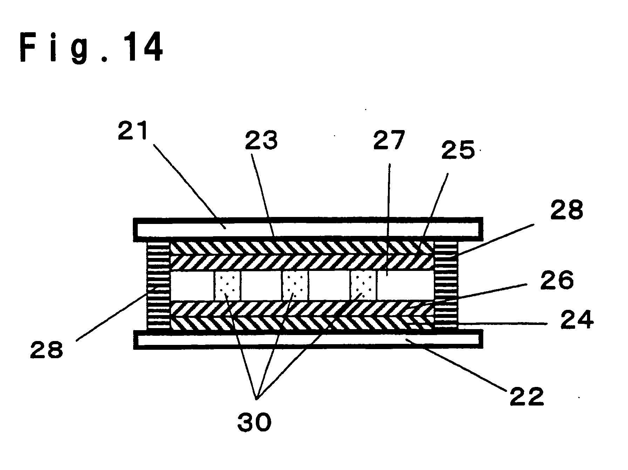

Further, it is preferable that upper and lower substrates are fixed to each other in order to increase impact-resistance properties to the electro-optical element. For instance, the upper and lower substrates can be fixed by using adhesive spacers 30 as shown in Fig. 14. Material having high transparency should be selected for the adhesive spacers. An adhesive resin may be applied to a portion unnecessary for a scattered display. Further, it is possible to adjust the scattering performance even in a position necessary for a scattered display by adjusting the area occupied by the adhesive spacers. In Fig. 14, other reference numerals designate the same or corresponding elements in Fig. 2.

The composite display device of the present invention can be used as a display device for an automobile, a display for an operator in an aircraft, representation for a show window or observation tower, a display for information located in a office or factory, or at a reception desk in an exhibition hall, a display device for a game machine and so on.

In Fig. 18, the first display member 1 may be a display device of mechanical type or may be a display of electric type as used generally for the liquid crystal display device. The composite display device of the present invention provides a novel display in combination of the first display member and the second display member. The first display member may include a background scenery. Several examples of display will be described with reference to drawing.

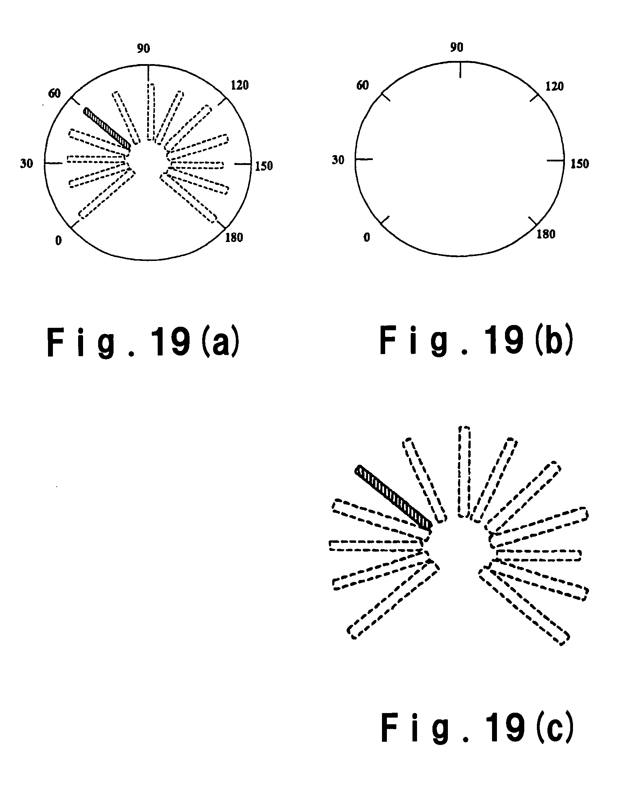

Fig. 19 is a diagram showing a speed meter for a vehicle wherein Fig. 19(a) shows a display in combination of a display by the first display member 1 and a display by the electro-optical element 2 as the second display member; Fig. 19(b) shows a display by the first display member 1, i.e., the frame and numerical values of the speed meter (a fixed display), and Fig. 19(c) shows a display by the electro-optical element 2, i.e., a pointer of the speed meter. In Fig. 19(c), pointers indicated by broken lines are imaginary lines comprising pixels of the electro-optical element 2. Accordingly, in operation of the electro-optical element, an observer feels as if a pointer moves in a circumferential direction.

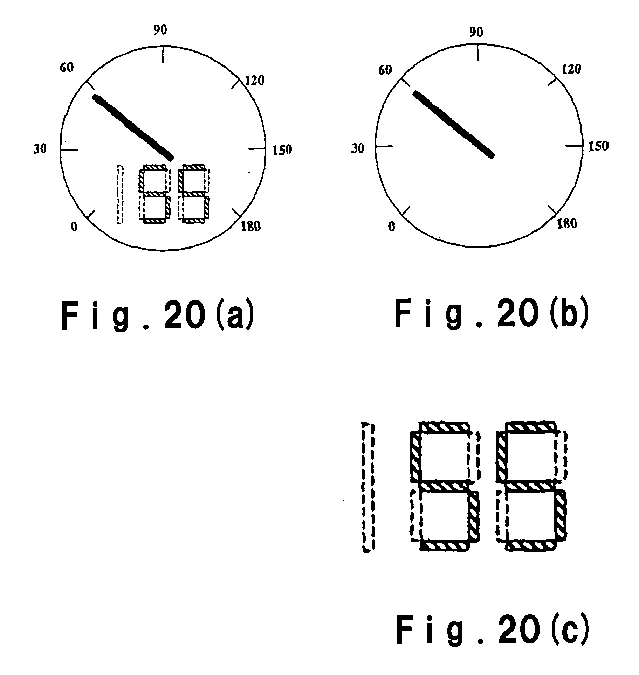

Fig. 20 shows a speed meter for a vehicle wherein Fig. 20(a) shows a display in combination of a display by the first display member 1 and a display by the electro-optical element 2 as the second display member, Fig. 20(b) shows a display by the first display member 1 wherein the pointer of the speed meter is indicated by a mechanical indicator, and Fig. 20(c) shows a display by the electro-optical element 2 wherein a figure of "55" in the speed meter is shown digitally. The electro-optical element 2 may display an arrowhead indicating a destination as in a simple navigation system.

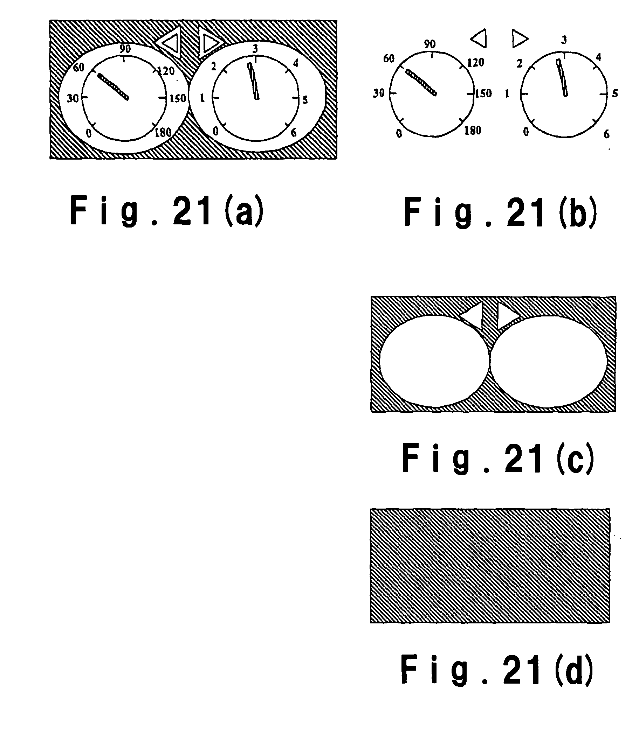

Next, Fig. 21 will be explained. Fig. 21(a) is a display in combination of a display by a first display member 1 and a display by the electro-optical element 2 as the second display member, Fig. 21(b) shows a display by the first display member 1, Fig. 21(c) shows a display by the electro-optical element 2, and Fig. 21(d) also shows a display by the electro-optical element.

Fig. 21 shows an instrument panel for a vehicle. The first display member 1 indicates a speed meter and a tachometer which may be of mechanical display devices or electric display devices. Fig. 21(c) shows the frame of the instrument panel. A hatched portion is in a light scattering state, and white portions are in a light transmitting state. By arranging meters and direction indicators of the first display member 1 in the white portions (light transmitting portions), it is possible to display the instrument panel as shown in Fig. 21(a). Further, by applying a predetermined voltage to the light transmitting portions, all display areas of the electro-optical element can be changed to a light scattering state, and the display by the first display member 1 can be shielded as shown in Fig. 21(d).

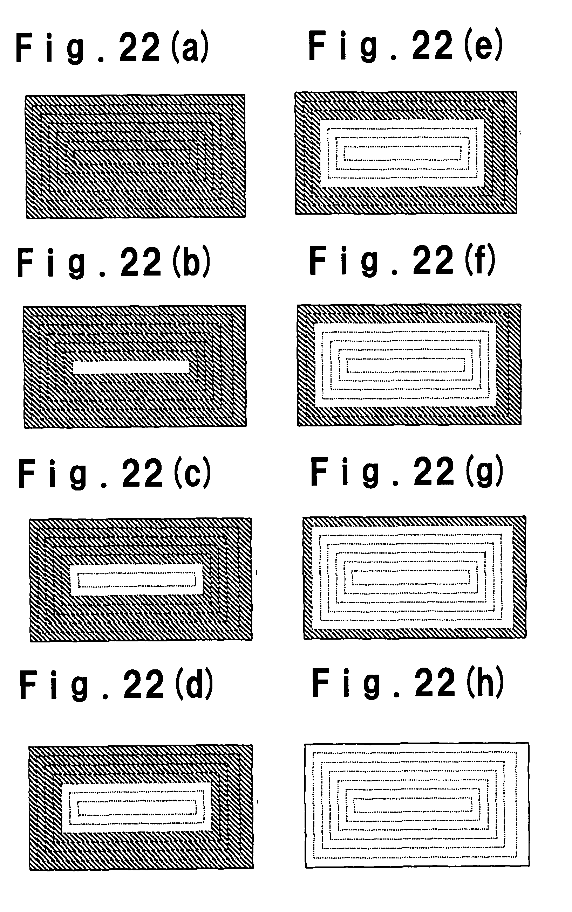

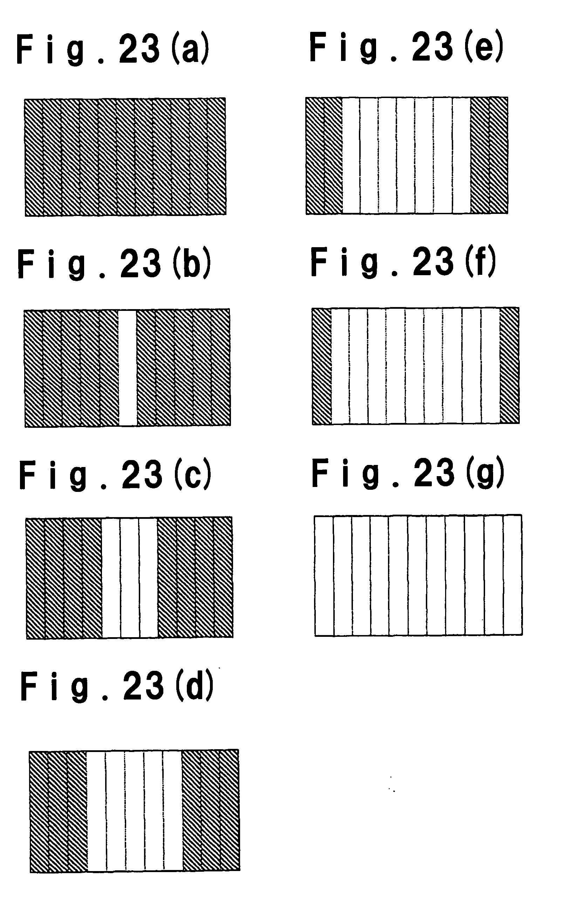

An embodiment that the electro-optical element 2 is used as a shielding plate for the first display member 1 will be described with reference to Figs. 22 and 23. Hatched portions in Figs. 22 and 23 show light scattering states and white portions shows light transmitting states.

Fig. 22(a) shows an entirely shielded state, Fig. 22(b) shows that only a central portion is a light transmitting portion, Fig. 22(c), Fig. 22(d)... show that an outer circumferential portion of the light transmitting portion becomes sequentially a light transmitting state, and Fig. 22(h) shows that the entire area becomes a light transmitting state. Accordingly, an observer will recognize that the first display member opens gradually from the central portion to the peripheral portion, as the time passes, in the progress from the state of Fig. 22(a) to the state of Fig. 22(h). When the first display member 1 is to be shielded, it may be shielded at once, or it may be shielded gradually from the state of Fig. 22(h) to the state of Fig. 22(a).

Fig. 23(a) shows an entirely shielded state, and in a sequential order of from Figs. 23(b), 23(c)..., the light transmitting area expands gradually toward an outer side as if a curtain is opened. In the display of the electro-optical element 2, a single belt-like portion indicated by a broken line may be formed by a single pixel, or formed by a plurality of dots so that the transmitting or scattering of light in belt-like portions indicated by broken lines can be controlled.

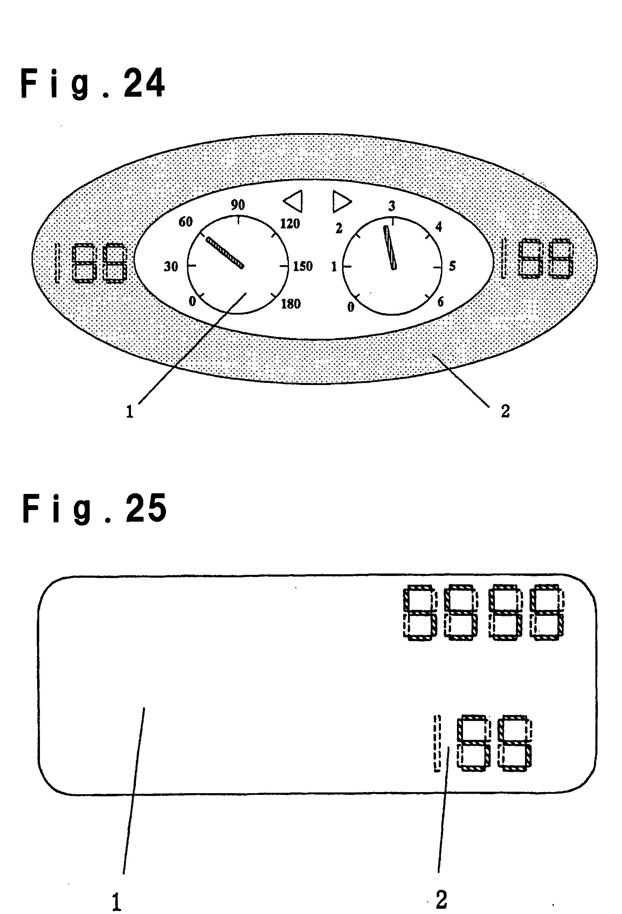

Fig. 24 shows a display in the instrument panel of a vehicle. In this case, the electro-optical element 2 of the present invention is disposed in front of and so as to surround a speed meter and so on of the first display member 1. A netted portion in Fig. 24 is in a light transmitting state and transparent. Accordingly, a digital figure of "55" looks as if it is displayed in a suspended state in a vacant space.

As described above, when the composite display device of the present invention is used, the electro-optical element 2 becomes a transparent body in a light transmitting state, and accordingly, the presence of the element is not conspicuous. Further, it can be used as a shielding plate or a display member in a light scattering state. In particular, when it is used as a display member, an impression that a display appears in a vacant space can be provided. Accordingly, the present invention can provide a fundamentally new display.

As another embodiment, a case that the first display member 1 is used as a mirror will be described. In Fig. 25, the electro-optical element 2 as the second display member is disposed in front of a rear view mirror for a vehicle. When the vehicle is in cruising, a voltage is not applied across the transparent electrodes of the electro-optical element 2 so that a light transmitting state is presented. Accordingly, the electro-optical element 2 is transparent and there is no obstacle to the rear-view mirror. Further, even in cruising, a display may be effected by the electro-optical element 2 as long as it is not obstructive to the view of the mirror.

The electro-optical element 2 may be adapted to display information about the backward of the own vehicle, such as a distance between the own vehicle and a behind vehicle, a distance to a wall surface in moving backward at a time of parking the vehicle, a distance to an object (a person, an obstacle or the like) in rear of the own vehicle at a time of starting and so on, which is obtained by a backward object distance sensor. Further, when a plurality of backward object distance sensors are installed in the vehicle, a distance information can be displayed at positions (for example, at a right end and a left end) of the back mirror so as to correspond to positions of the sensors. Accordingly, the driver can recognize the positional relation to an obstacle behind the vehicle. Further, in addition to the distance information, a time information to a passenger at a rear seat or an arrival prediction time cooperated with a navigation system may be displayed.

When the driver wants to obtain a backward information in a parking site of the vehicle, the visibility of the rear-view mirror can be maintained because the electro-optical element 2 can provide a light transmitting state other than a displayed portion. Accordingly, a state of backward and the distance to a backward object can be obtained by looking only the rear-view mirror. When the rear-view mirror is the first display member 1, light of the display portion (light scattering portion) of the electro-optical element 2 is scattered twice whereby the intensity of scattered light is increased and a display having a high contrast can be presented. In this case, the electro-optical element 2 may be disposed so as to cover the entire surface of the rear-view mirror or to cover a part of the rear-view mirror, for instance, a half portion on its right side.

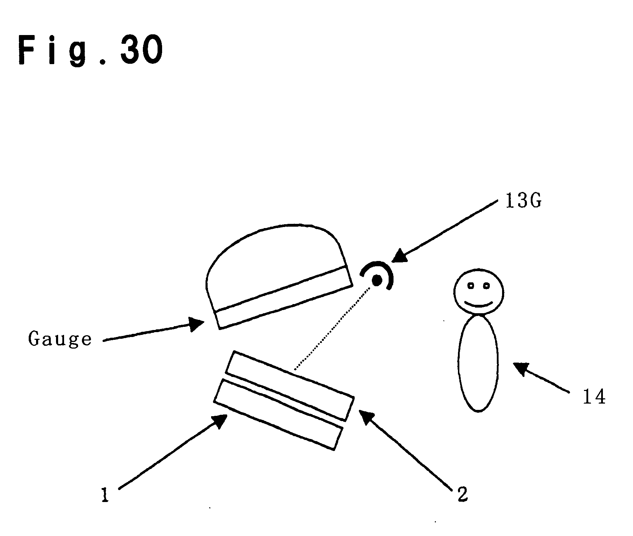

Further, as shown in Fig. 30, the electro-optical element 2 may be disposed between an observer 14 and a mirror as the first display member 1. This mirror reflects gauges such as a speed meter and so on in the instrument panel unlike the rear-view mirror used in the embodiment described before. Since gauges can be observed by means of the mirror, not only the driver but also a passenger at an assistant driver's seat can get information by adjusting the angle of the mirror. An unnecessary information can be shielded partially by the electro-optical element 2 disposed in front of the mirror. Further, an illuminator 13G such as a light source utilizing a light guide or a projection light source may be used. The illuminator 13G is preferably disposed at a position where illumination does not come in observer's sight.

When the electro-optical element of the present invention has sufficient scattering properties, light scatters all directions. Accordingly, the observer 14 can observe a display of the electro-optical element 2 from various directions such as an oblique direction. Namely, the viewing angle of the electro-optical element 2 is very wide. Generally, the ratio of backward scattering of light beams (the ratio of light beams scattering toward the first display member 1 with respect to the electro-optical element 2) is often smaller than the ratio of forward scattering (the ratio of light beams scattering toward the opposite side of the first display member 1 with respect to the electro-optical element 2). Accordingly, it is preferable to dispose the illuminator for illuminating the electro-optical element 2 at a side opposite to the observer 14.

As shown in Fig. 24, it is preferable that a peripheral portion of the electro-optical element 2 is made transparent because it can be emphasized that a display is observed as if it is suspended in space in a background scenery. In order to achieve this purpose, it is preferable to seal the peripheral portion of the electro-optical element 2 with a transparent resin layer. When a frame is used, the frame should be transparent.

The sealing agent may be any known resin as long as the resin has a high transparency. When the resin having a high transparency is used, the electro-optical element 2 provides high transparency over the entire surface, and the state that a display is observed as if it is suspended in space can be emphasized. For example, when a glass substrate is used, an epoxy resin or an acrylic resin having a refractive index close to the refractive index of glass should be used, whereby the state that the transparent glass is suspended in space can be realized.

The electro-optical element 2 used may be of any size including a small size having a diagonal line of about 3 cm to a large size having a diagonal line of about 3 m. Further, a large-sized electro-optical element can be formed by connecting several electro-optical elements.

Further, it is preferable to form an AR coat (anti-reflective coat) comprising a multilayer of dielectric materials having different refractive indices such as SiO₂ and TiO₂ on at least one surface of the electro-optical element 2, for example. By this, the reflection of outside light on the surface of the glass substrate can be reduced to increase the contrast ratio. Although the AR coating may be conducted to both surfaces, it is sufficient to conduct the coating to only the side of the observer 14. Further, an anti-reflective plastic film may be bonded thereon.

In the composite display device of the present invention, the AR coating is preferably conducted to both surfaces of the first display member 1. As another method to provide anti-reflection properties, a resin material having the same refractive index as the glass substrate may be disposed between the first display member 1 and the electro-optical element 2.

In addition, in order to protect the composite layer 27 of the electro-optical element 2 from U.V. rays, a UV cut filter may be provided on an outer surface of the electro-optical element 2. The UV cut filter should have a high transparency.

For the above-mentioned AR coat or UV cut filter, a plastic film may be used. When the plastic film is bonded to the electro-optical element at a side of the observer 14, it has also function as a scratch-resistant film for a vehicle when it is used for the vehicle.

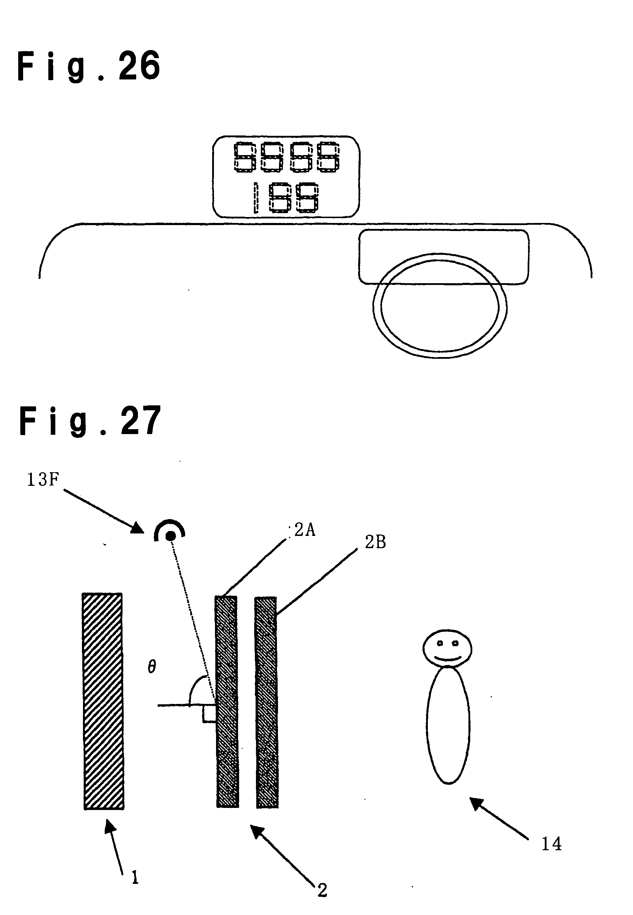

Fig. 27 shows another embodiment of the present invention. Two stacked electro-optical elements 2A, 2B are disposed between a first display member 1 and an observer 14. In order to effect a display in which same patterns move three-dimensionally, it is preferable that a display pattern of one electro-optical element 2A is the same as that of the other electro-optical element 2B located at a side of the observer 14. For instance, when the one electro-optical element 2A has a display pattern of a dot matrix type, the other electro-optical element 2B has preferably the display pattern of a dot matrix type wherein respective dots (pixels) should have the same size. Further, in order to call observer's attention, the size of the display pattern may be changed. For instance, when the size of a display pattern of the electro-optical element at the observer's side is made large, the observer can be impressed as if the display comes close to him.

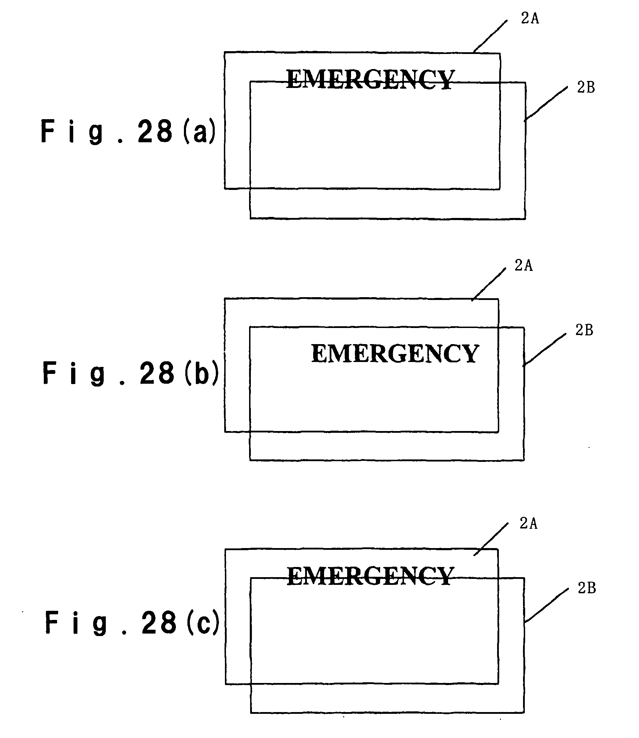

When the one electro-optical element 2A is of a dot matrix type to display "EMERGENCY" as shown in Fig. 28, the other electro-optical element 2B is also adapted to display "EMERGENCY". When these two electro-optical elements 2A, 2B are stacked so that the same display can be provided, a novel display can be obtained, which will be described with reference to Fig. 28 showing states of display by the electro-optical elements 2A, 2B in perspective views. The electro-optical elements 2A, 2B are both adapted to transmit light under application of no voltage and to scatter light under application of a voltage.

Fig. 28(a) shows a state of display in a moment that when the one electro-optical element 2A displays "EMERGENCY" and the other electro-optical element 2B does not show any display. At a subsequent time as shown in Fig. 28(b), the one electro-optical element 2A does not show any display and the other electro-optical element 2B displays "EMERGENCY".

Further, at a further subsequent time as shown in Fig. 28(c), the one electro-optical element 2A displays again "EMERGENCY" and the other electro-optical element 2B does not show any display. By repeating these displays in a certain time period, a display can be moved spatially. The composite display device of this embodiment can call observer's attention by providing a three-dimensional display in comparison with the conventional technique that a display is simply turned on and off in a plane.

Further, as shown in Fig. 27, it is preferable to dispose an illuminator 13F between the first display member 1 and the electro-optical element 2A in order to improve fanciful design and attractiveness of the display. The illuminator 13F is preferably disposed at a position that visibility to the first display member 1 is not reduced. In determining the position so as not to reduce the visibility, it is preferable that a projection light source is used as the illuminator 13F, and it is located in rear of the electro-optical element 2A in an oblique direction so that the incident angle θ of the principal light beams from the light source (indicated by a broken line in Fig. 27) is 45°-60° with respect to the normal line from a central portion of the display surface of the electro-optical element 2A.

Further, the illuminator 13F may comprise a plurality of light sources having different colors, by which attractiveness can further be improved. At the time shown in Fig. 28(a), the electro-optical element 2A is irradiated by light from a light source emitting a red-colored light. At the time shown in Fig. 28(b), the electro-optical element 2B is irradiated by light from a light source emitting a green-colored light, and at the time shown by Fig. 28(c), the electro-optical element 2A is irradiated by light from a light source emitting a red-colored light. Thus, observer's attention can be called by a display effected by synchronizing the driving and illumination.

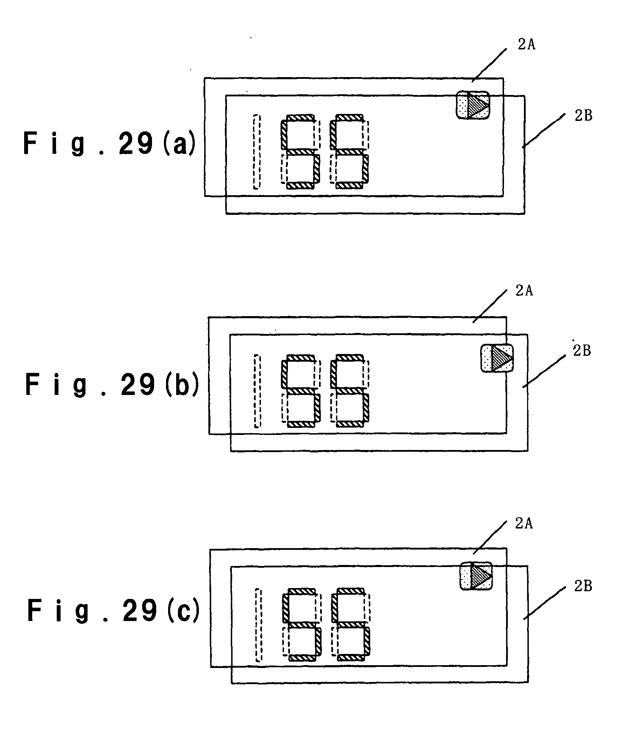

As shown in Fig. 29, illumination may be applied to a limited area wherein an yellow-colored light from a light source is irradiated to a digital numeral displaying portion to display it in an yellow color, and a red-colored light from a light source is irradiated to an arrowhead portion to display it in a red color. Fig. 29 shows states of display by two electro-optical elements 2A, 2B in perspective views so as to be easily understood, the two electro-optical elements 2A, 2B being arranged between the first display member 1 and an observer 14 in the same manner as Fig. 28. Fig. 29(a) shows a state of display at a specified time in which one electro-optical element 2A displays a digital numeral "55" and a display of an arrowhead pointing a right direction, and the other electro-optical element 2B does not show any display. Fig. 29(b) shows a state of display at a subsequent time in which the digital numeral "55" of the electro-optical element 2A is kept unchanged while the arrowhead of the electro-optical element 2A is not shown, and an arrowhead is displayed in the electro-optical element 2B. Fig. 29(c) shows a state of display at a further subsequent time in which the electro-optical element 2A displays the digital numeral "55" and the arrowhead, and the electro-optical element 2B is in a state that no display is effected.

In this embodiment, the case that the electro-optical element 2 comprises two stacked electro-optical elements as shown in Figs. 27 to 29 has been described. However, more than two electro-optical elements may be disposed in stack. When the number of stack is increased, the depth of space in a display can be increased whereby a further excellent three-dimensional display can be obtained. The kinds of stack covers two electro-optical elements made with close contact, disposed with air gap or disposed with sandwiched transparent material.

Description will be made with reference to Fig. 14. It is preferable, from the viewpoint of improving the impact resistance of the electro-optical element 2 of the present invention, that transparent substrates 21, 22 as constituent elements of the electro-optical element are fixed by means of adhesive spacers 30. Each of the adhesive spacers 30 may be a spherical spacer around which an adhesive resin is coated. However, use of a pillar-like spacer made of an adhesive resin is preferable from the viewpoint of fixing properties. When the electro-optical element of this embodiment is used for a composite display device for a vehicle, the transparent substrates of the electro-optical element 2 can be fixed more strongly. This is an advantage because the composite display device mounted on a vehicle is vibrated when the vehicle is in cruising or starting of the engine.

It is preferable that the adhesive spacers 30 are made of material having a high transparency. Although the adhesive spacers 30 are preferably disposed in a portion unnecessary for a scattered display (a non-display portion), they may be disposed in a display portion if the area occupied by the adhesive spacers 29 can be minimized and scattering properties can be adjusted.

The electro-optical element can be driven by a conventional technique such as a static driving or a duty driving. Further, an active element such as TFT, TFD or the like may be used.

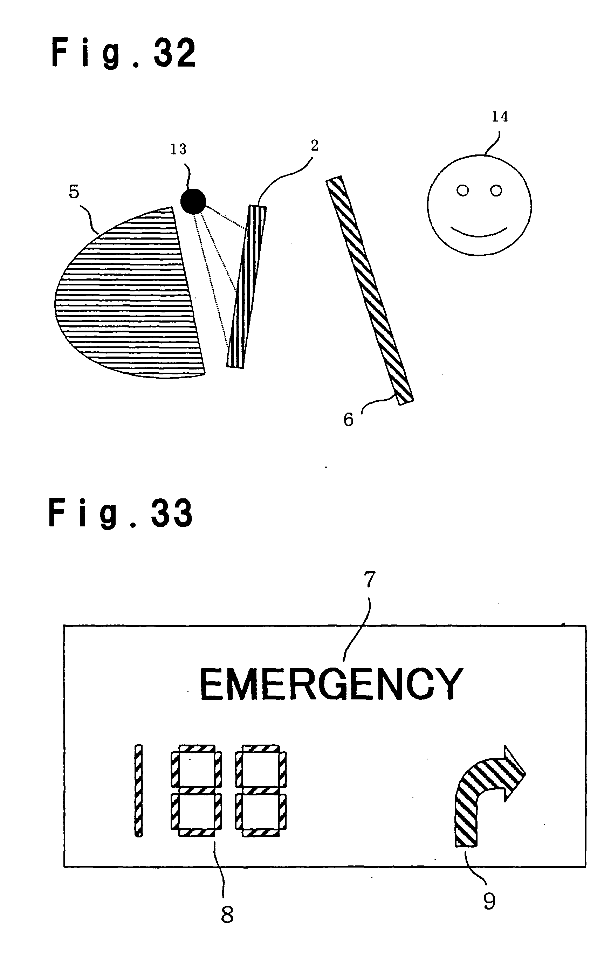

Fig. 32 is a diagrammatical cross-sectional view showing an example to which the composite display device of the present invention is applied. In Fig. 32, the electro-optical element 2 is disposed in front of an instrument panel 5 in a vehicle, and an illuminator 13 is disposed at an upper position between the electro-optical element 2 and the instrument panel 5.

An observer 14 (a driver in this example) can see the content of display in the instrument panel 5, which is displayed in a transparent portion (a non-display portion) of the electro-optical element 2 disposed beyond the stirring wheel 6 of the vehicle. The angle in a direction of the illuminator 13 from the central position of the electro-optical element 2 inclines about 45° with respect to the normal line of the electro-optical element 2.

Fig. 33 is a diagram showing an example of a state of display by the electro-optical element 2. In Fig. 33, a display section 7 for displaying an alarm such as an urgent message is formed in an upper portion of the electro-optical element 2, a display section 8 for displaying speed is formed in its lower left portion and a display portion 9 for indicating a direction is formed in its lower right portion. The portion other than display portions 7, 8 and 9 is a transparent portion so that an observer can see the content of display in the instrumental panel 5 through the transparent portion although the content of display is not shown in Fig. 33.

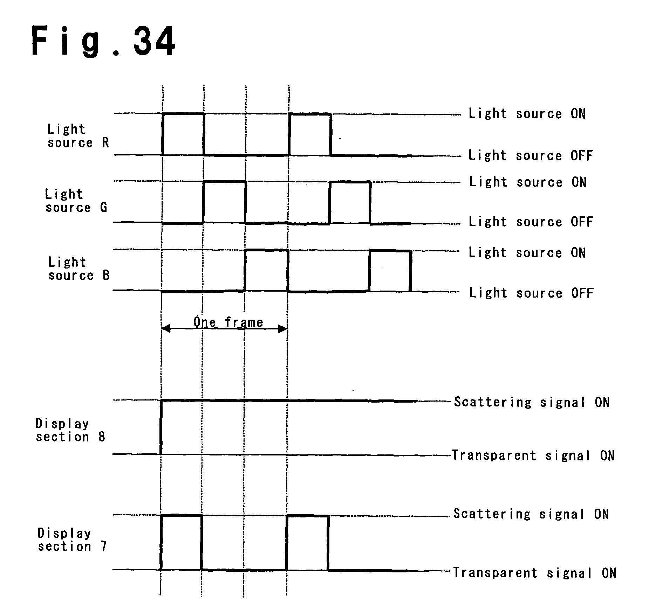

In the following, the relation between driving of the electro-optical element 2 and illumination in the field sequential color system used for the composite display device of the present invention will be described with reference to timing charts of Figs. 34 to 37.

First, a case that the display section 8 emits a white color and the display section 7 emits a red color in the electro-optical element 2 shown in Fig. 33, is assumed. As the light source for the illuminator 13, light sources capable of emitting three colors of red (R), green (G) and blue (B) are used. As shown in Fig. 34, a period that these three colors are emitted sequentially and all R, G and B are emitted once, is assumed to be one frame. When the display section 8 is in a scattering state to all of an R-emitting time, a G-emitting time and a B-emitting time, the display section 8 emits a white color. When the display section 7 is in a scattering state in only an R-emitting time and is a transmitting state in a G and B emitting time, the display section 7 emits a red color.

It is preferable that the period of one frame which corresponds to the period of emission of the three colors from the light sources is 1/40 sec or less. Namely, it is preferable that the frame frequency corresponding to the frequency of emission of three colors from the light sources is 40 Hz or more. If it is less than 40 Hz, flickering may be observed. More preferably, the frame frequency is 50 Hz or more, further preferably, 60 Hz or more.

The electro-optical element 2 thus prepared (see a cross-sectional view of Fig. 31) becomes a light scattering state when a predetermined voltage (for example, 60V) is applied to the composite layer 104 capable of providing a light transmitting state and a light scattering state, and becomes a light transmitting state when no voltage is applied to the composite layer 104.

In Fig. 34, accordingly, "scattering signal ON" corresponds to a state that a predetermined voltage is applied across the transparent electrodes 102, 107, and "transparent signal ON" corresponds to a state that the potential difference between the transparent electrodes 102, 107 is 0V.

Such an electro-optical element that becomes a light transmitting state when a predetermined voltage is applied to the composite layer 104 and becomes a light scattering state when no voltage is applied to the composite layer 104, may be used. When such electro-optical element is used, "scattering signal ON" corresponds to a state that the potential difference between the transparent electrodes 102, 107 is 0V, and "transparent signal ON" corresponds to a state that a predetermined voltage is applied between the transparent electrodes 102, 107.

In the following, a signal for generating a timing of "light source ON" and "light source OFF", i.e., a signal to instruct to each light source a rising time and a falling time for "light source ON" and "light source OFF" is referred to as a switching signal.

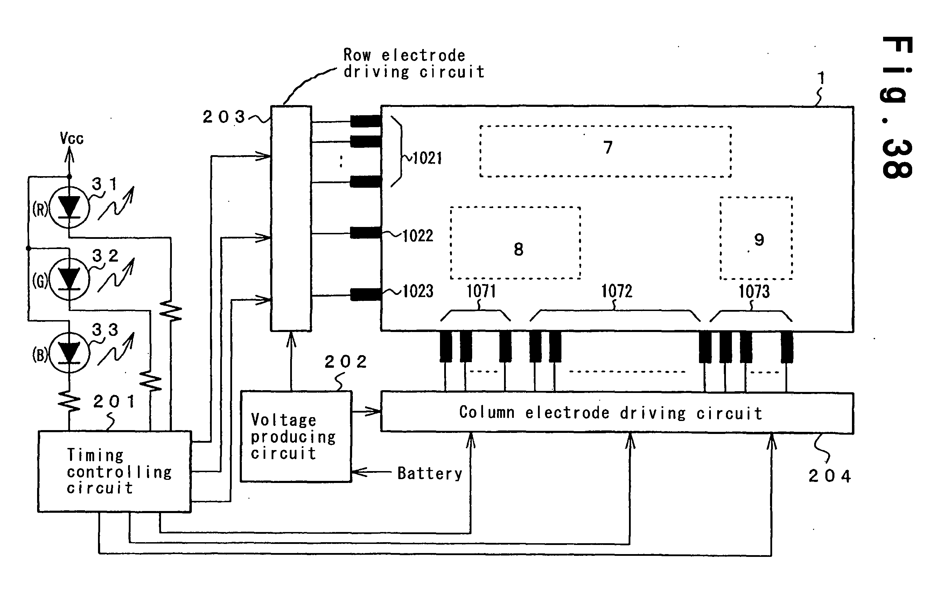

Fig. 38 is a block diagram showing an embodiment of construction of a driving circuit for driving the electro-optical element 2. The driving circuit shown in Fig. 38 comprises a row electrode driving circuit 203 for applying a driving voltage to a first transparent electrode 1021 for driving the display section 7, a second transparent electrode 1022 for driving the display section 8 and a third transparent electrode 1023 for driving the display section 9 in response to an instruction from a timing controlling circuit 201 and a column electrode driving circuit 204 for applying a driving voltage to a fourth transparent electrode 1072 for driving the display section 7, a fifth transparent electrode 1071 for driving the display section 8 and a sixth transparent electrode 1073 for driving the display section 9 in response to an instruction from the timing controlling circuit 201. A voltage producing circuit 202 supplies a driving voltage to the row electrode driving circuit 203 and the column electrode driving circuit 204. The voltage producing circuit 202 receives power from an in-vehicle battery.

Transparent electrodes 1021, 1022 and 1023 correspond to the transparent electrode 102 in Fig. 31, and transparent electrodes 1071, 1072 and 1073 correspond to the transparent electrode 107 in Fig. 31. In Fig. 38, only leading lines of the transparent electrodes 1021, 1022, 1023, 1071, 1072 and 1073 are shown.

The timing controlling circuit 201 operates a red color light source 31, a green color light source 32 and a blue color light source 33 at a timing as shown in Fig. 34, for example. Namely, a switching signal is supplied to each of the red color light source 31, the green color light source 32 and the blue color light source 33. When the display section 7 comprises a dot matrix, the crossing point of the first transparent electrode 1021 for driving the display section 7 and the fourth transparent electrode 1072 for driving the display section 7 forms a dot (pixel). In this case, the timing controlling circuit 201 supplies an instruction signal to the row electrode driving circuit 203 so as to apply a driving voltage sequentially to each transparent electrode 1021, in a period (a time of 1/3 of one frame) in which each of the red color light source 31, the green color light source 32 and the blue color light source 33 is operated, for example. Further, a driving voltage is applied to each transparent electrode 1072 according to display data.

Driving voltages to be applied to transparent electrodes 1021 and transparent electrodes 1072 are, for instance, ±30V and it is preferable to operate these transparent electrodes by changing polarities of driving voltage signals to the transparent electrodes 1021 and the transparent electrodes 1072 at a predetermined timing, i.e., by an alternating driving.

In a case that each of display sections 8 and 9 comprises a plurality of segments, the timing controlling circuit 201 supplies instruction signals to the row electrode driving circuit 203 so that driving voltages (for instance, -30V) are applied to the transparent electrodes 1022, 1023 as common electrodes, in a state of "scattering signal ON" exemplified in Fig. 34, and supplies instruction signals to the column electrode driving circuit 204 so that driving voltages (for instance, +30V) are applied to the transparent electrodes 1071, 1073 connected to segments to be displayed.

Here, the case that each of the display sections 8, 9 comprises a plurality of segments, is described. However, the display sections 8, 9 may comprise a dot matrix in the same manner as the display section 7.

Colors from the R, G and B color light sources can be switched at substantially the same time as the input of a switching signal. However, the display sections 7, 8 and 9 cannot respond immediately to the input of scattering signals or transparent signals (specifically, the initiation of applying driving voltages or the cancellation of driving voltages to the transparent electrodes 1021, 1022, 1023, 1071, 1072, 1073) because there is a delay of response in the electro-optical element. If the scattering state is maintained under a condition other than a desired light source color, there would cause the mixing of colors and the deterioration of colors. Accordingly, it is necessary to avoid the occurrence of such state that the scattering state is maintained under the condition other than a desired light source color. Accordingly, it is preferable to adjust the timing of inputting a switching signal to a light source and the timing of inputting a signal (the initiation of applying a driving voltage or the cancellation of a driving voltage) to the display section 7, 8 or 9.

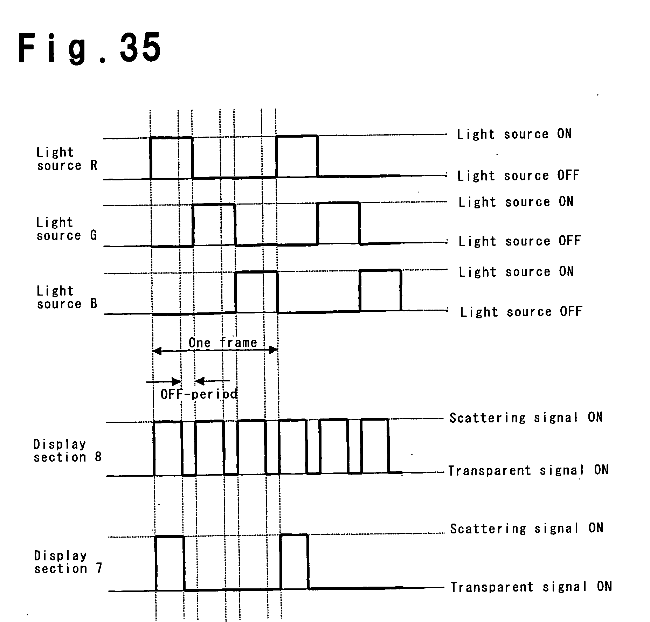

For example, it is possible to reduce a possible deterioration of colors by making the initiation time of "transparent signal ON" to the display section 7 earlier than the switching signal, or by providing an "OFF-period" so that the display section 8 does not become a "scattering signal ON" state just before the input of the switching signal, by the timing controlling circuit 201 as shown in Fig. 35. In Fig. 35, an example that the display section 8 emits a white color and the display section 7 emits a red color, is shown.

In Fig. 35, when the "OFF-period" is made long, the period of "scattering signal ON" becomes short so that the display section becomes dark. Accordingly, the "OFF-period" should be determined so as to prevent the mixing of colors due to the fact that the scattering state maintained even other than a desired light source color and to prolong the time of "scattering signal ON" as possible. Specifically, the "OFF-period" is preferably about 2 ms.

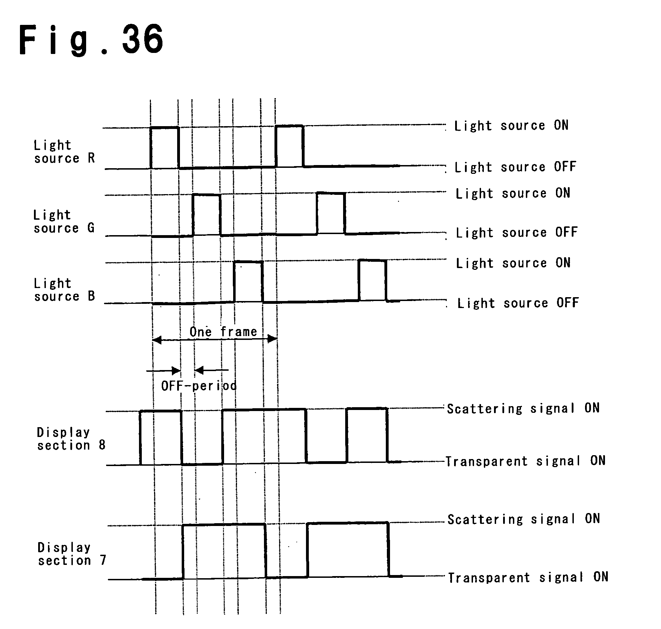

Further, it is possible to reduce the deterioration of colors by controlling the timing so that an "OFF-period" is provided between an "ON-period" and the next "ON-period" of each of the light sources 31, 32 and 33 by the timing controlling circuit 201, as shown in Fig. 36. In the example shown in Fig. 36, the period of "scattering signal ON" is not shortened unlike the example shown in Fig. 35. Further, in the example shown in Fig. 36, the display section 8 is observed in a mixed color of R and B, and the display section 7 is observed in a mixed color of G and B.

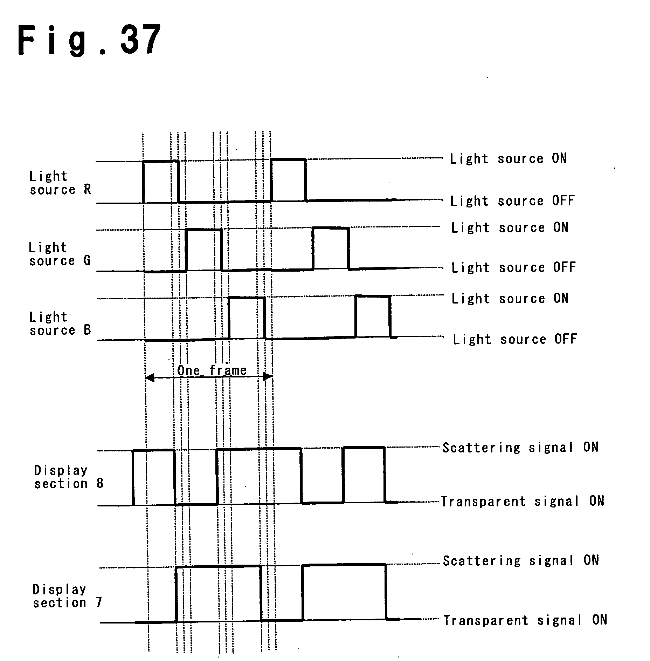

Further, as shown in Fig. 37, when the timing controlling circuit 201 performs a timing control so that an "OFF-period" is provided between an "ON-period" and the next "ON-period" of each of the light sources 31, 32 and 33 and performs a timing control so that "scattering signal ON" and "transparent signal ON" are initiated before the "OFF-period" of each of the light sources 31, 32, 33, a possible deterioration of colors can be reduced. In the example shown in Fig. 37, the display section 8 is observed in a mixed color of R and B and the display section 7 is observed in a mixed color of G and B.

When three light sources 31, 32 and 33 are provided, the display sections of the electro-optical element 2 can have 7 colors: red, a mixed color of R and G, a mixed color of R and B, a mixed color of R, G and B (white), green, a mixed color of G and B and blue. Namely, it can emit 8 colors including a transparent state. Thus, a monochrome display and a display of mixed color can be effected simultaneously in different display sections in a single electro-optical element 2. Accordingly, a multicolor display can easily be achieved.

Further, a monochrome display and a multicolor display can be effected at different timing in a display section. For example, in the display section 7, a display of red color can be presented in a certain time period, and a display of mixed color of R and B can be effected in another time period. The advantage that a monochrome display and a multicolor display are effected at different timing is that for instance, when a display section is used for displaying an alarm, a display for alarming can be effected different colors depending on kinds of alarm.

In each example of Figs. 34 to 37, the length of time of "scattering signal ON" by the timing controlling circuit 201 is basically a single kind. However, when the length of time of "scattering signal ON" is controlled to be changeable, more kinds of color can be provided.

Since the response speed of the electro-optical element changes depending on temperature, the timing of lighting operation may be changed. In particular, when the ambient temperature is relatively low, the response speed of the electro-optical element becomes low. Accordingly, the frame frequency should be determined to be low. However, if it is too low, flickering becomes conspicuous. Accordingly, it should be 40 Hz or more. Further, if the response speed is low, it is impossible to follow color signals from light sources so that the color purity of a display decreases. When temperature becomes lower than a predetermined temperature, the continuous lighting operation of each light source should be stopped and operation may be switched so as to display with only a specified color.

In order to balance intensities of colors from the light sources, the intensity of each color from the light sources may be changed or the operation time on each light source may be changed. Generally, white color is often used as a displayed color. In this case, the white color is developed by adjusting intensities of light source colors.

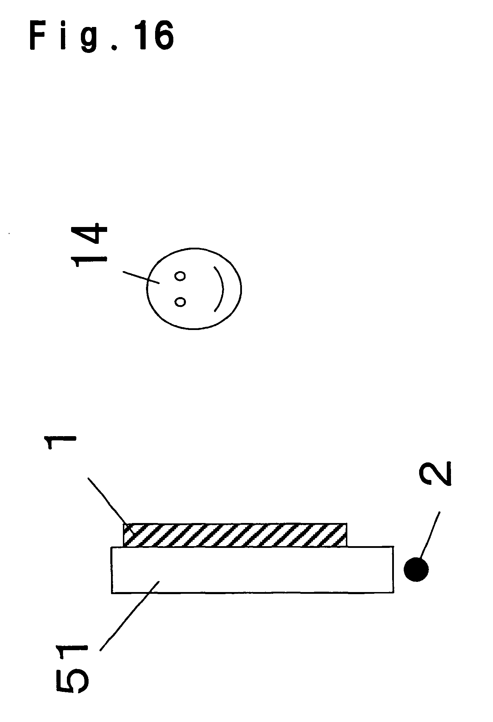

As an illumination method using a light source, a light guide may be used. Fig. 16 is a diagram showing an embodiment of the structure. The electro-optical element is connected optically to a light guide 51. The light guide 51 may be made of an acrylic resin having a thickness of 3 mm, for instance. A reflection film of metal such as aluminum may be provided at the peripheral portion of the light guide.

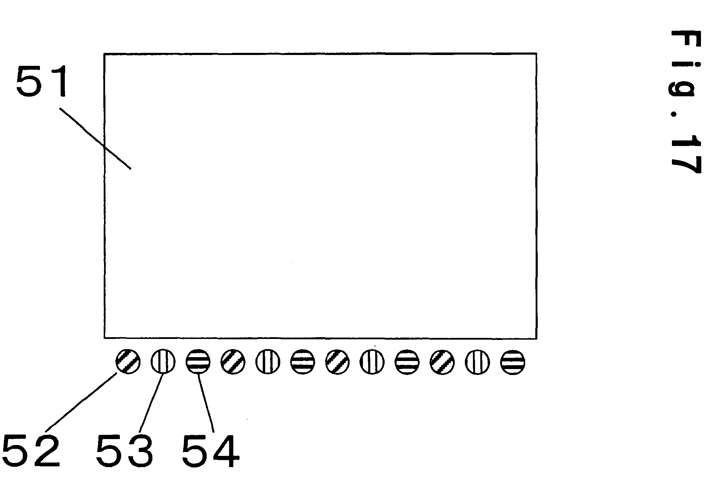

Light from a light source is made incident into the light guide from its an end portion. Although the light source may be a cold cathode ray tube or LED, it is preferable to use LED in order to switch and emit each color of R, G and B at a high speed. When LED is used, light sources emitting light source colors R 52, G 53 and B 54 are arranged sequentially at an end portion of the light guide 51 along its long axis direction as shown in Fig. 17.

Fig. 33 shows a type of segments. However, the display may be a full-dot matrix type.

In this embodiment, three light sources 31, 32 and 33 shown in Fig. 38 are provided as the illuminator 13. However, two light sources emitting different light source colors may be used. Even in the case of using two light sources, a multicolor display in response to light source colors can be obtained in the electro-optical element 2 by using the field sequential color system.

The composite display device of the present invention can be used as a display located near a driver's seat in an aircraft, representation for a show window or an observation tower, an information displaying device located at or near a reception desk in an office, a factory or an exhibition hall, an image displaying device of a game machine, other than the display device for a vehicle. For example, electro-optical elements 2 can be arranged in the whole area of a movable amusing part with pictures in a game machine wherein when the movable amusing part is operated, all display pixels in the electro-optical elements 2 are made a transparent state, and when the movable amusing part is in stand still, a color display is effected in a display section of the electro-optical elements 2.

In the following, some examples of the present invention will be described wherein "part or parts" means part or parts by weight.

### EXAMPLE 1

95 parts of a cyano type nematic liquid crystal (BL-006 manufactured by MERCK & CO., INC) having a positive dielectric anisotropy, 5 parts of an uncured curable compound indicated in Fig. 3(c), 0.15 part of benzoin isopropyl ether were mixed, and 2.5 parts of a chiral agent (a mixture of S-811 and C15 (both manufactured by MERCK & CO., INC) in a weight ratio of 1:1) was dissolved into the mixture to prepare a mixed composition.

Then, a pair of substrates with transparent electrodes on which thin polyimide films were formed, these thin polyimide films being rubbed in one direction, were prepared. The pair of substrates was opposed so that directions of rubbing were perpendicular to each other. A slight amount of resin beads having a diameter of 13 µm were arranged between the paired substrates. A transparent epoxy resin having a width of about 1 mm was formed at four sides of the substrates by printing to prepare an electro-optical cell, and the mixture was filled in the cell. This cell was kept at 25°C and HgXe lamps having the principal wavelength of about 365 nm were arranged upper and lower sides of the cell. U.V. rays of 3 mW/cm² were irradiated for 3 min from the upper and lower sides to obtain an electro-optical element in which a peripheral portion other than a display portion was transparent.

The compound shown in Fig. 3(c) corresponds to the compound of Formula (1) wherein each of A1 and A2 is an acryloyl group, each of R1 and R2 is a propylene group, the mesogen structural portion of Z is 4,4'-bephnylene group, and each of n and m is 1.

Operations of applying to the liquid crystal optical element a voltage of rectangular wave of 50 Hz and 50 Vrms for 10 min and removing the voltage were repeated 10 times. In the measurement of the transmissibity by using a transmissibity measuring system (F value of the optical system: 11.5) with a light source for emitting light having a half width of about 20 nm at 530 nm (central wavelength), the transmissibity was 80% under application of no voltage, and the value of the contrast obtained by dividing this value by the transmissibity under application of 50 Vrms, was 28.

### EXAMPLE 2

An electro-optical element as shown in a diagrammatically cross-sectional view of Fig. 2 was prepared as follows. 80 parts of a nematic liquid crystal (AG-1016XX manufactured by Chisso Corporation) having a negative dielectric anisotropy, 20 parts of a curable compound indicated in Fig. 3(a) and 0.2 parts of benzoin isopropyl ether were mixed to prepare a mixed composition.

Then, a pair of glass substrates having a length of 200 mm, a width of 200 mm and a thickness of 1.1 mm with transparent electrodes on which vertically aligning polyimide films (JALS-682-R3 manufactured by JSR Corporation) were formed, were prepared. The paired substrates were disposed so as to oppose the thin polyimide films, and a slight amount of resin beads having a diameter of 6 µm were arranged between the substrates. Then, an epoxy resin layer having a width of about 1 mm was formed at four sides of the substrates by printing. The epoxy resin layer was bonded to the sides and cured so that the peripheral portion of the electro-optical element could be sealed by a transparent resin layer. Specifically, a part of the sealing layer was released, and after the curing of the sealing layer, the above-mentioned mixed composition was filled in the thus formed liquid crystal cell. Then, the partially released portion of the sealing layer was sealed by an epoxy resin, and the resin was cured. Thus, the sealing layer 28 shown in Fig. 2 was formed. Then, a curable compound was cured in a state that liquid crystal molecules were aligned in a vertical direction to the substrate surface by the vertically aligning polyimide films to thereby form a composite layer.

Specifically, the filled liquid crystal cell was kept at 40°C, and Hg-Xe lamps having the principal wavelength of about 365 nm were disposed upper and lower sides of the liquid crystal cell. U.V. rays of about 2.5 mW/cm² and about 2.5 mW/cm² were irradiated respectively from the upper and lower sides for 10 min to obtain an electro-optical element in which a peripheral portion other than a display portion was sealed by the transparent resin layer.

A sealing frame 29 of transparent resin may be provided at the peripheral portion of the electro-optical element in order to improve the mechanical strength and prevent the composite layer from chemically deteriorating. In this case, the electro-optical element has a double-sealed structure by the transparent resin layers.

The rising time in the light transmitting/scattering states of the composite of the electro-optical element was about 1.5 ms and the falling time of it was about 2 ms.

The composite display device was disposed at a position relating to an observer 14 as shown in Fig. 1, and a driving voltage was supplied from a battery (not shown). An antireflection film was provided on the surface of the electro-optical element at an observer side. As a result, the observer 14 could observe simultaneously a display comprising a character and a figure in the electro-optical element 2 and a background scenery 15 behind the electro-optical element without flickering. Since the portion other than the display portion of the electro-optical element of the composite display device is transparent, an impression that white characters and figures were suspended in space could be presented.

### EXAMPLE 3

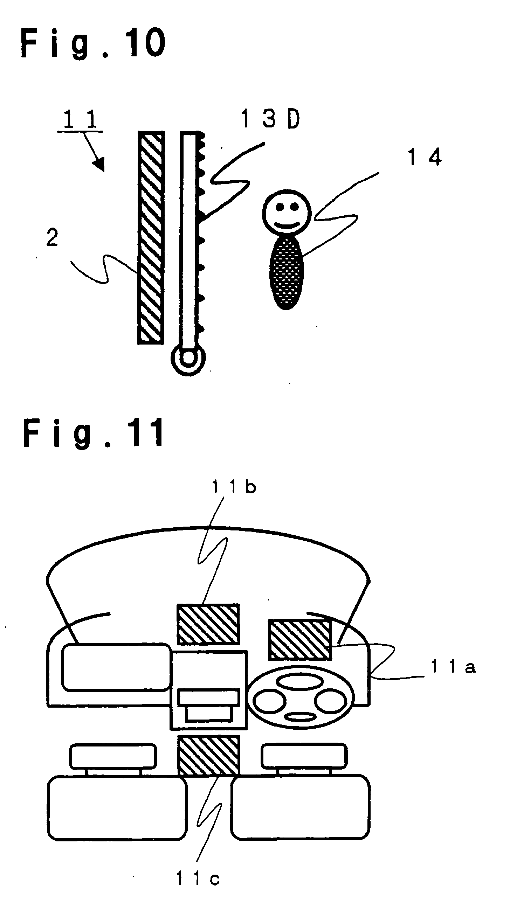

A composite display device was prepared by using the electro-optical element 2 formed in the same manner as Example 1. A driving voltage was supplied from a battery (not shown). A composite display device 11a or 11b was disposed on or above the dashboard of a vehicle as shown in Fig. 11. The composite display device could be observed by the driver without moving his eyeshot from the front direction. Further, this arrangement minimizes possible driver's inattentive driving.

Various combinations of different colors and illumination are possible to display various kinds of information such as a speed information, an alarm information, a safe distance information, data in a water temperature gauge, distance meter and so on. Further, a display by an arrowhead can display a simple navigation.

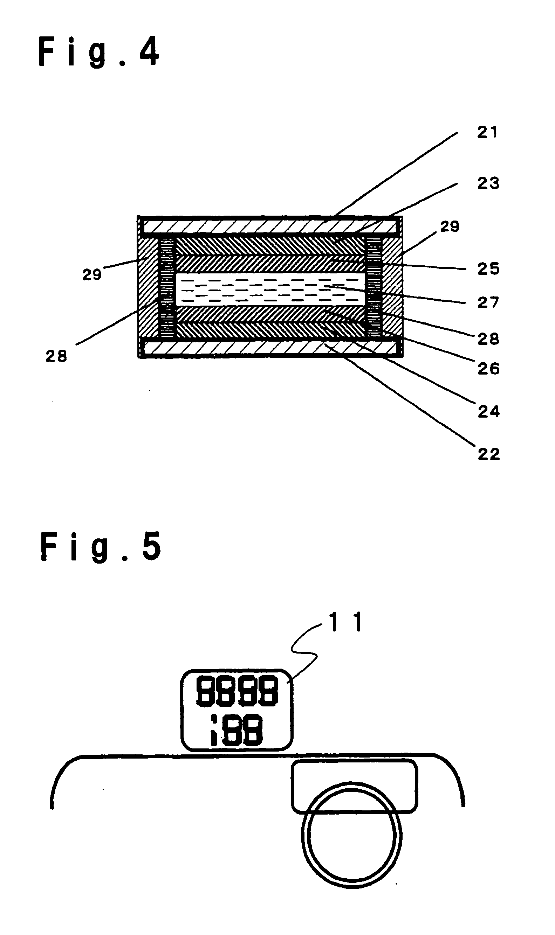

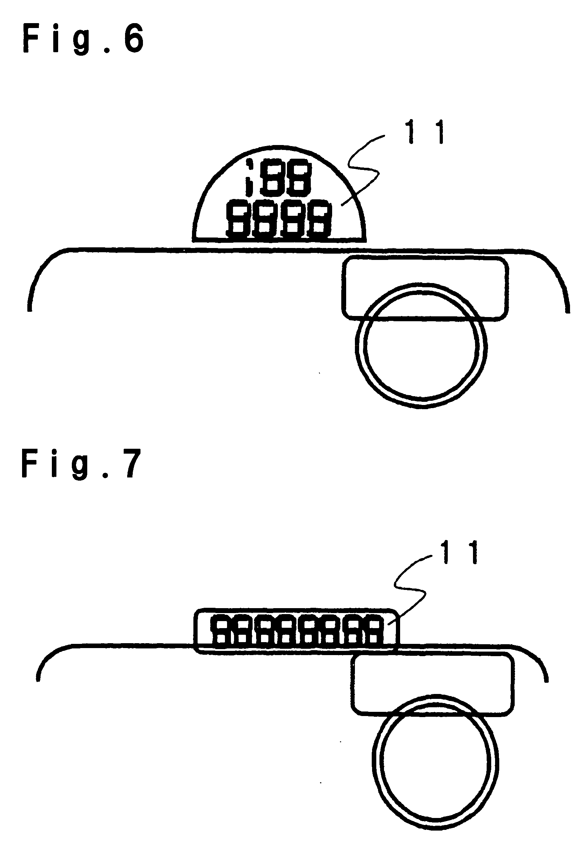

The composite display device 11 may assume a shape as shown in Fig. 5, 6 or 7 depending on purposes and can effect a designed display.

Further, a composite display device 11c may be disposed between the driver's seat and a passenger's seat between front and rear portions of an automobile. Since the device is transparent in a non-display state, the driver and a passenger on the rear seat can look each other, and they do not have a feeling of alienation. It also provides information such as fares or services to a passenger in a taxi, and the passenger can observe easily the content of fares or services.

Further, the composite display device may be disposed at a side of the rear glass plate of the vehicle to display a message such as an alarm information to the driver of a vehicle behind the vehicle, e.g., a sign of beginner driver, accompanying a baby, aged driver or learner driver. Also, the content of the display can easily be recognized by the driver by the aid of a back mirror.

### EXAMPLE 4

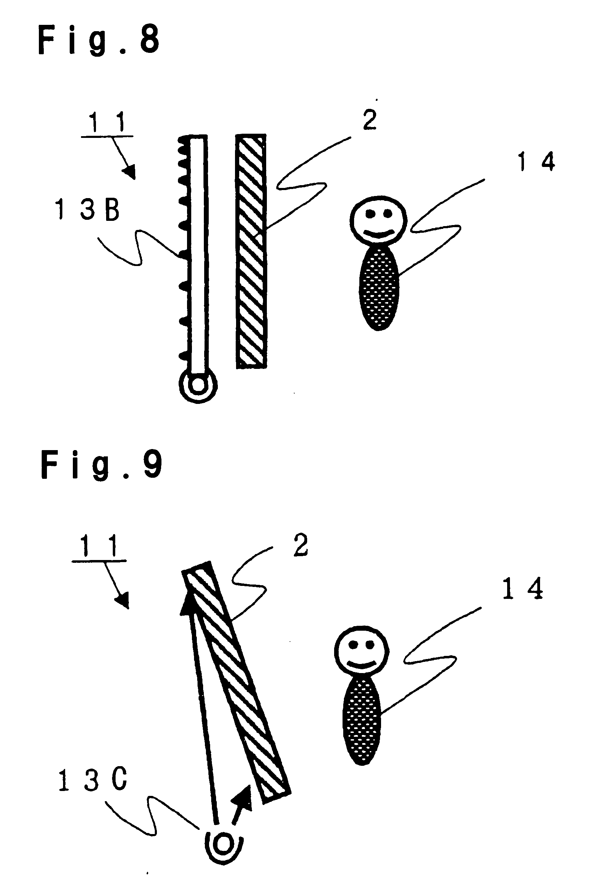

A transparent backlight was used as an example in a combination of the electro-optical element 2 prepared in the same manner as Example 1 and various kinds of illuminator 13. For example, Fig. 8 shows an example of utilizing the structure that a front light is turned backward. Fig. 9 shows an example of using a projection light source. Fig. 10 shows an example using a front light.

### EXAMPLE 5

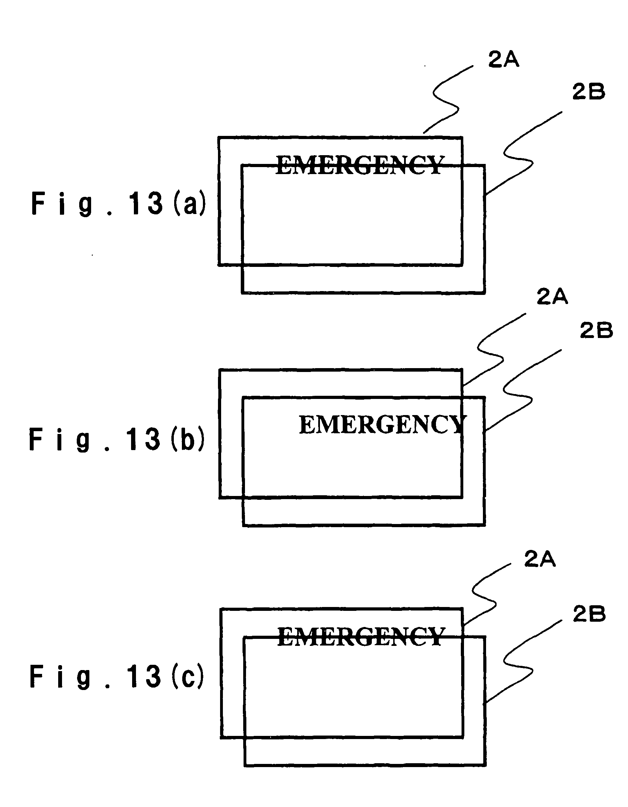

Two electro-optical elements 2A, 2B each prepared in the same manner as Example 2 and a battery (not shown) are disposed as shown in Fig. 12. An illuminator 13E was formed by arranging LEDs in array. The illuminator 13E was disposed in rear of the electro-optical element 2A so that light was incident at an angle of about 45° to the center of the electro-optical element 2A. Both two electro-optical elements 2A, 2B were adapted to display a message of "EMERGENCY". Fig. 13 shows an example of how to display. Fig. 13(a) and Fig. 13(c) shows that the electro-optical element 2A remoter from an observer 14 displays a message of "EMERGENCY" and the electro-optical element 2B closer to the observer does not display. Fig. 13(b) shows that the electro-optical element 2B disposed close to the observer 14 displays a message of "EMERGENCY", and the electro-optical element 2A at the backside does not display. Accordingly, by repeating sequentially operations of (a) → (b) → (c) with time, the observer 14 feels as if the message of "EMERGENCY" moves back and forth in space since the electro-optical element is transparent other than the display section whereby it attracts observers attention.

The color of illumination used in the above case was red and illumination of green or blue was also used depending on display patterns. Three light sources of red, blue and green were used, and a display of yellow was carried out by illuminating red and green at the same time.

### EXAMPLE 6

An electro-optical element 2 was prepared in the same manner as Example 2 provided that adhesive spacers 30 capable of bonding upper and lower substrates were used instead of resin beads for controlling the gap (Fig. 14). On the substrates with transparent electrodes on which polyimide films as vertically aligning films were formed, liquid for the adhesive spacers was coated, and patterning is conducted by a photolithographic method.

The adhesive spacers were of pillar-like form having a size of cross sectional area of about 20 µm × 20 µm and a height of 6 µm at the pitch of 300 µm × 300 µm. Then, the electro-optical element was fabricated in the same operation as Example 2 except that the upper and lower substrates were bonded by applying heat. Accordingly, the phenomenon that the transparency under application of no voltage was reduced by a shock or the like, was decreased largely.

As an embodiment of the structure according to the present invention, a speed meter for a vehicle was used as the first display member 1 to be combined with the electro-optical element 2 so that a display as shown in Fig. 19 was provided. As a result, the observer 14 could observer clearly that the pointer of the electro-optical element indicated around 60 in a fixed display located behind the electro-optical element.

### EXAMPLE 7

An electro-optical element 2 having the cross-sectional structure as shown in Fig. 18 was prepared as follows. First, 80 parts of nematic liquid crystal (AG-1016XX manufactured by Chisso Corporation) having a negative dielectric anisotropy, 20 parts of a curable compound indicated in Fig. 3(a) and 0.2 parts of benzoin isopropyl ether were mixed to prepare a mixed composition.

Then, a pair of glass substrates having a length of 100 mm, a width of 100 mm and a thickness of 1.1 mm with transparent electrodes on which vertically aligning polyimide films (JALS-682-R3 manufactured by JSR corporation) were formed, were prepared. The pair of substrates was disposed so as to oppose thin polyimide films, and a slight amount of resin beads having a diameter of 6 µm were arranged between the substrates. Then, an epoxy resin layer having a width of about 1 mm was formed at four sides of the substrates by printing, and was bonded thereto, followed by curing, so that the peripheral portion of the electro-optical element 2 was sealed by the transparent resin layer. Specifically, a part of the sealing layer was released, and after the curing of the sealing layer, the above-mentioned mixed composition was filled in the thus formed liquid crystal cell. Then, the partially released portion of the sealing layer was sealed by an epoxy resin and the resin was cured. Thus, the peripheral sealing layer 28 was formed .

Then, a curable compound was cured in a state that the liquid crystal in which the curable compound was dissolved was aligned in a vertical direction to the substrate surface by the vertically aligning polyimide films to thereby form a composite layer 27. Specifically, the filled liquid crystal cell was kept at 40°C, and Hg-Xe lamps were disposed upper and lower sides of the liquid crystal cell. U.V. rays of about 2.5 mW/cm² were irradiated respectively from the upper and lower sides for 10 min to obtain an electro-optical element sealed by the transparent resin layer.

A sealing frame of transparent resin may be provided at the peripheral portion of the electro-optical element in order to improve the mechanical strength and prevent the composite layer from chemically deteriorating. In this case, the electro-optical element has a double-sealed structure by the transparent resin layers.

The driving of the composite layer of the electro-optical element 2 to switch between a light transmitting state and a light scattering state was conducted by using an alternating rectangular wave of 200 Hz and the voltage for switching was between 0V and 30V. The rising time was about 1.5 ms and the falling time was about 2 ms.

A speed meter for a vehicle was used as the first display member 1 so that a display as shown in Fig. 20 was presented. As a result, the observer could observe simultaneously a display of digital numerals of the electro-optical element 2 and the pointer of the speed meter located behind the electro-optical element. Since the electro-optical element became a completely light transmitting state under application of no voltage, it gave a feeling of open air when the electro-optical element was not used. When the electro-optical element was used, an impression that numerals were suspended in space could be provided.

### EXAMPLE 8

An electro-optical element 2 was prepared in the same manner as Example 2. The electro-optical element 2 was disposed in front of a mirror to cover the entire surface of it, and the electro-optical element was driven in the same manner as Examples 1 and 7 respectively. The portion of the electro-optical element to which a voltage was not applied across its transparent electrodes maintained a transparent state, and the visibility of the mirror was good. Further, the portion to which a voltage was applied, i.e., the display portion became a light scattering state and a clear display having a high visibility could be obtained respectively in each driving condition.

In this embodiment, description has been made about the first display member being gauges or the mirror. However, this embodiment includes a construction that the electro-optical element 2 is mounted on the dashboard of a vehicle as shown in Fig 25. In this embodiment, the display of the first display member is a background scenery itself. Since the electro-optical element of the present invention is transparent, the portion other than the display portion provides good visibility and does not block the drivers view.

### EXAMPLE 9

Two electro-optical elements 2A, 2B were prepared in the same manner as Example 2. These two electro-optical elements were stacked and it was disposed in front of the instrument panel as the first display member 1 as shown in Fig. 27. As an illuminator 13F, a red LED and a green LED as projection light sources were disposed obliquely behind an electro-optical element 2A so that θ was 45°.

Characters of "EMERGENCY" were displayed in the electro-optical element 2A and at the same time, no display was made in an electro-optical element 2B as shown in Fig. 28. At a subsequent time, no display was made in the electro-optical element 2A and a display of "EMERGENCY" was effected in the electro-optical element 2B. The above-mentioned ways of display were repeated. In a time period in which the electro-optical element 2A effected the display, a red-colored light was irradiated to the electro-optical element 2A by opening and closing a shutter (not shown) to provide a display of "EMERGENCY" in a red color, and in a time period in which the electro-optical element 2B effected the display, a green-colored light was irradiated to the electro-optical element 2B by opening and closing a shutter (not shown) to provide a display of "EMERGENCY" in a green color. By doing this, it was possible to obtain a display wherein the display moved spatially; the display had different colors depending on portions to be displayed and the display was very attractive to an observer.

### EXAMPLE 10

An electro-optical element 2 was prepared in the same manner as Example 2 except that transparent pillar-like adhesive spacers were interposed between upper and lower transparent substrates 21, 22 of the electro-optical element 2, instead of the resin beads used in Example 2, in order to improve the adhesion strength of the transparent substrates 21, 22. A method for producing the pillar-like adhesive spacers will be described. After the transparent electrodes and the vertically aligning films were formed on the transparent substrates, a transparent adhesive spacer material was coated on the entire surface by a spin coating method followed by drying. Then, adhesive spacers were formed by using a photolithographic method so that intervals of individual adhesive spacers were 300 µm, and the diameter and the height of the adhesive spacers were respectively 20 µm and 6 µm. Then, the two transparent substrates were bonded to each other and the peripheral portion of the substrates was sealed by a sealing material. Then, the bonded transparent substrates were placed in a warm air furnace for a predetermined time to fix them.

The obtained electro-optical element had sufficient vibration proof and impact strength, and provided excellent transparent properties. This electro-optical element was disposed between the first display member as a mirror in which a speed meter was reflected and an observer, as shown in Fig. 30. In the electro-optical element, the transparency was high in a portion under application of no voltage, and characters of the speed meter could clearly be observed.

### EXAMPLE 11

In the following, an embodiment of the composite display device of the present invention using a field sequential color system will be described.

As an illuminator 13, three kinds of LED light sources capable of emitting red (R), green (G) and blue (B) colors were used. The relation between the light sources and driving signals to the electro-optical element is shown in a timing chart of Fig. 35. The frame frequency was determined to be 60 Hz and an "OFF-period" was to be 2 msec.

As shown in Fig. 32, the electro-optical element 2 was disposed in front of an instrument panel 5 of a vehicle and the illuminator 13 was disposed above the space between the electro-optical element 2 and the instrument panel 5. The illuminator 13 was located at a position inclined at about 45° with respect to the normal line extending from the center of the electro-optical element 2. Then, a pattern as shown in Fig. 33 was displayed in the electro-optical element 2. Specifically, an upper display section 7 was for an urgent message to be displayed by dots, a lower left display section 8 was for displaying speed and a lower right display section 9 was for indicating a direction.

By using the field sequential color system, it is possible to obtain desired colors in desired portions simultaneously. For example, a display of red was effected in the upper display section 7, a display of green was effected in the lower left display section 8, and a display of blue was effected in the lower right display section 9. It was also possible to change colors depending on the content of display. The observer's attention could be increased by changing colors. The composite display device could provide new and amusing displays. Further, a display in the instrument panel 5 behind the device could be observed through the transparent portion whereby a stereoscopic display could be realized.

Further, it was possible to display various kinds of information such as an information of speed, various kinds of alarm, distance between two cars going in the same direction, data in a water temperature gauge or a distance meter by different colors, and simple navigation could be achieved by using a display of an arrowhead.

### EXAMPLE 12

Conditions of the composition of the electro-optical element 2 having the cross-sectional structure shown in Fig. 31 were the same manner as Examples 1 and 2 respectively.

Then, a pair of glass substrates 101, 108 having a length of 200 mm, a width of 200 mm and a thickness of 1.1 mm with transparent electrodes 102, 107 on which vertically aligning polyimide films (JALS-682-R3 manufactured by JSR Corporation) were formed, were prepared. The paired substrates were disposed so as to oppose the thin polyimide films, and a slight amount of resin beads having a diameter of 6 µm were arranged between the substrates. An epoxy resin layer having a width of about 1 mm was formed at four sides of the substrates 101, 108 by printing. The epoxy resin layer was bonded to the sides and cured so that the peripheral portion of the electro-optical element 2 was sealed by a transparent sealing layer 105.

A part of the sealing layer 105 was released, and after the curing of the sealing layer 105, the above-mentioned mixed composition was filled in the thus formed cell to obtain two kinds of electro-optical cell having a composition condition as Example 1 and 2. Then, the released portion of the sealing layer 105 was sealed by a transparent epoxy resin followed by curing the resin whereby the sealing layer 105 as shown in Fig. 31 was formed. Then, the curable compound was cured in a state that the liquid crystal molecules were aligned in a vertical direction to the substrate surface by the aid of the vertically aligning polyimide films to thereby form a composite layer 104.

Specifically, the filled mixed composition was kept at 40°C, and Hg-Xe lamps having the principal wavelength of about 365 nm were disposed upper and lower sides of the cell. U.V. rays of about 2.5 mW/cm² and about 2.5 mW/cm² were irradiated respectively from the upper and lower sides for 10 min to obtain the electro-optical element 2.

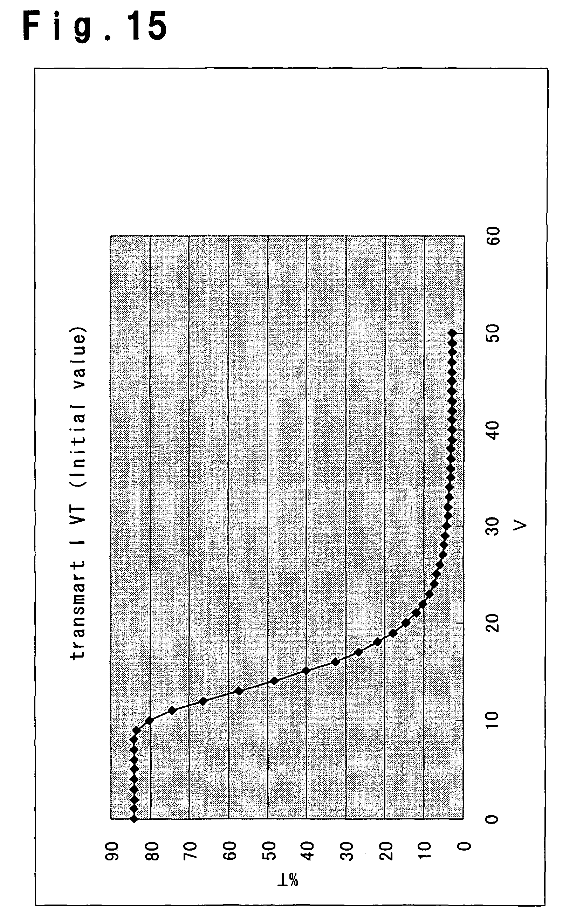

The optical characteristic (applied voltage-transmittance characteristic) was evaluated with an optical system having a collection angle of 5°. A result of evaluation is shown in Fig. 15. An AR treatment was not conducted to the surface of the glass substrates. The transmittance under application of no voltage was about 84%. Further, the transmittance under application of a voltage of 40V was about 3% respectively.

The rising time in transmitting scattering states of the composite layer 104 of the electro-optical element was about 1.5 ms and the falling time of it was about 2 ms.

Conditions of arrangement and the way of displaying were determined in the same manner as Example 11. A similar result was obtained.

### EXAMPLE 13

Two electro-optical elements 2 prepared in the same manner as Example 12 were piled with a gap to use them for displaying. For example, a state that the electro-optical element at a remoter side displayed a message of "EMERGENCY" and the electro-optical element at a closer side did not display and a state that the electro-optical element at a closer side displayed a message of "EMERGENCY" and the electro-optical element at a remoter side did not display, were repeated. By these operations, it appeared that the message of "EMERGENCY" moved back and forth in space.

### EXAMPLE 14

A electro-optical element 2 was prepared in the same manner as Example 12 except that adhesive spacers capable of bonding upper and lower substrates 101, 108 were used instead of resin beads for controlling a gap. On the substrates 101, 108 provided with transparent electrodes 102, 107 on which vertically aligning polyimide films were formed, liquid for the adhesive spacers was coated and patterning was conducted by using a photolithographic method whereby pillar-like spacers having a size of cross sectional area of about 20 µm × 20 µm and a height of 6 µm were formed at the pitch of 300 µm × 300 µm. Then, the same process as Example 2 was used, however, the upper and lower substrate 101, 108 were bonded finally by a heat treatment. Accordingly, the phenomenon that the transparency under application of no voltage was reduced by a shock, could be reduced remarkably.

According to the composite display device of the present invention, a display allowing to observe simultaneously a background scenery behind the device and a character or a figure displayed on the electro-optical element, and providing good transparency, can be realized in a used state.

Further, the composite display device of the present invention can provide a novel display such that when the device is unused, a display is transparent, the presence of the device is not conspicuous or does not give a feeling of oppression and give a feeling of open air, and when the device is used, a display by the electro-optical element and a display of background can be observed simultaneously. Further, since the portion other than the display portion of the electro-optical element is transparent, it is possible to provide a display capable of giving to an observer an impression that a picture or a message suspends in space.

Further according to the composite display device using a field sequential driving system of the present invention, a display of at least two colors can be presented simultaneously in optional portions of the electro-optical element, and a background scenery is visible since the non-display portion is transparent as glass.

The entire disclosures of Japanese Patent Application No. 2002-265465 filed on September 11, 2002, Japanese Patent Application No. 2002-265764 filed on September 11, 2002, Japanese Patent Application No. 2002-335454 filed on November 19, 2002, Japanese Patent Application No. 2002-336534 filed on November 20, 2002 and Japanese Patent Application No. 2003-025153 filed on January 31, 2003 including specifications, claims, drawings and summaries are incorporated herein by reference in their entireties.

## Claims

1. A composite display device comprising a first display member and a second display member disposed between the first display member and an observation point wherein the second display member comprises an electro-optical element which transmits light under application of no voltage and scatters light under application of a voltage, and the light transmittance under application of no voltage is at least 80%.

2. The composite display device according to Claim 1, wherein the haze value in a light scattering state is at least 80%.

3. The composite display device according to Claim 1 or 2, wherein the first display member is a mirror or a gauge.

4. The composite display device according to Claim 1 or 2, wherein the first display member is a person or a physical body.

5. The composite display device according to Claim 1, 2, 3 or 4, wherein a plurality of second display members are arranged.

6. The composite display device according to Claim 5, wherein the plurality of second display members display the same display pattern, and when a second display member is in a display state, another second display member is in a non-display state.

7. The composite display device according to anyone of Claims 1 to 6, wherein the electro-optical element comprises a pair of substrates with transparent electrodes and a composite layer interposed therebetween, and the composite layer comprises a liquid crystal/cured resin composite containing liquid crystal and a cured product of a curable compound soluble to the liquid crystal.

8. The composite display device according to anyone of Claims 1 to 7, wherein the portion excluding a connecting portion to an external circuit formed in a peripheral portion of the electro-optical element, is transparent.

9. The composite display device according to anyone of Claims 1 to 8, wherein there are provided an illumination means and a battery for applying a driving voltage to the electro-optical element.

10. The composite display device according to anyone of Claims 1 to 9, wherein an antireflection film or an ultraviolet ray shielding film is disposed on the surface of the electro-optical element.

11. The composite display device according to anyone of Claims 1 to 10, wherein the electro-optical element comprises a pair of substrates with transparent electrodes and a composite layer comprising liquid crystal and a cured product of a curable compound soluble to the liquid crystal, the composite layer being interposed between said pair of substrates, and adhesive spacers arranged in the composite layer.

12. The composite display device according to anyone of Claims 1 to 11, wherein:
light sources are provided to illuminate the electro-optical element, and
the light sources emit at least two light source colors, wherein the light sources emit the light source colors sequentially, the frequency of each colored light from the light sources is at least 40Hz, and at least a portion of the display region of the electro-optical element is rendered to be a light scattering state in association with illumination by one or a plurality of light source colors to the electro-optical element to thereby provide a display color comprising one or plurality of light source colors.

13. The composite display device according to Claim 12, wherein the light sources are able to emit a color of red, blue or green independently.

14. The composite display device according to Claim 12 or 13, wherein the display color comprises at least 8 colors.

15. A method for driving the composite display device described in any one of Claims 1 to 14, **characterized in that** a field sequential driving method wherein a change of light source colors of the light sources is associated with a display state of the electro-optical element, is used.

16. The method according to Claim 15, wherein the composite display device is used for at least displaying a speed of an automobile.
